(19) Europäisches Patentamt
European Patent Office
Office européen des brevets

(11) **EP 4 421 485 B1**

(12) **EUROPEAN PATENT SPECIFICATION**

(45) Date of publication and mention
of the grant of the patent:
**08.07.2026 Bulletin 2026/28**

(21) Application number: **22884766.1**

(22) Date of filing: **11.10.2022**

(51) International Patent Classification (IPC):
**G01N 27/414** *(2006.01)* **G01N 27/416** *(2006.01)*

(52) Cooperative Patent Classification (CPC):
**G01N 27/414; G01N 27/4148**

(86) International application number:
**PCT/JP2022/037861**

(87) International publication number:
**WO 2023/074348 (04.05.2023 Gazette 2023/18)**

(54) **ION CONCENTRATION MEASUREMENT DEVICE**

IONENKONZENTRATIONSMESSVORRICHTUNG

DISPOSITIF DE MESURE DE CONCENTRATION D'IONS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.10.2021 JP 2021176467**

(43) Date of publication of application:
**28.08.2024 Bulletin 2024/35**

(73) Proprietor: **National University Corporation
Shizuoka
University
Shizuoka-shi, Shizuoka 422-8529 (JP)**

(72) Inventor: **FUTAGAWA, Masato
Hamamatsu-shi, Shizuoka 432-8561 (JP)**

(74) Representative: **Wittmer, Maximilian
Grosse - Schumacher -
Knauer - von Hirschhausen
Patent- und Rechtsanwälte
Nymphenburger Straße 14
80335 München (DE)**

(56) References cited:
**EP-A1- 3 805 747** **WO-A1-2019/230917**
**JP-A- 2019 158 650** **JP-A- 2019 158 650**
**US-A1- 2019 360 962**

**Description**

**Technical Field**

The present invention relates to an ion concentration measurement device.

**Background Art**

A hydrogen ion index (hereinafter, referred to as "pH") is an important physical quantity in the agriculture field and the water quality testing field. As means for measuring pH, there are known means using litmus paper, means using a glass electrode, and means using an ion sensitive field effect transistor (ISFET). For example, Non-Patent Literature 1 discloses a technique relating to an ISFET.

**Citation List**

**Patent Literature**

Patent Literature 1: Japanese Unexamined Patent Publication No. 2011-215105
Patent Literature 2: International Publication WO 2019/230917
Patent Literature 3: US 2019/ 360962 A1

**Summary of Invention**

**Technical Problem**

For example, in the agricultural field, it is known that the pH value of soil suitable for each crop exists. Therefore, in the agricultural field, a technique of continuously measuring the pH of an object in which fine particles are mixed, such as soil, over a long period of time has been desired. An ISFET disclosed in Patent Literature 1 outputs a voltage corresponding to an ion concentration of a measurement object. However, it is known that even when the ion concentration does not change over time, the output voltage of the ISFET varies. The variation in the output voltage of the ISFET which is not caused by a change in ion concentration is referred to as drift.
Drift occurs due to a variation in the gate voltage of the ISFET. The variation in the gate voltage occurs due to ions, which are not the measurement object, infiltrating (entering) into an ion sensitive film. Therefore, the inventors of the present application have come up with a mechanism for suppressing the entry of ions, which are not a measurement object, by controlling a potential difference between the measurement object and the ISFET (Patent Literature 2). The pH sensor disclosed in Patent Literature 2 is provided with a measurement object power supply which controls measurement object voltage (VT) of the measurement object, a measurement ISFET including a measurement ion-sensitive membrane that selectively traps the measurement ions and generates a pH-dependent voltage (VPH) in accordance with the number of trapped measurement ions, a measurement membrane power supply which controls membrane control voltage (VC) of the measurement ion-sensitive membrane, and a power supply control unit which controls the magnitude of voltages outputted respectively from the measurement object power supply and the measurement membrane power supply.
In order to continue measurement over a long period of time, it is desirable to drive the device with less electric power. The device of Patent Literature 2 can suppress drift well. However, in order to suppress drift, controlling the potential difference between the measurement object and the ISFET is required, so that a continuous supply of electric power is required. Therefore, in order to realize measurement over a long period of time, it is desirable to achieve both the suppression of drift and a reduction in electric power to be consumed. Furthermore, a measurement device equipped with an ion-sensitive element is disclosed in Patent Literature 3.
The present invention provides an ion concentration measurement device is according to independent claim 1 capable of obtaining good output over a long period of time.

**Solution to Problem**

An ion concentration measurement device that is one embodiment of the present invention is installed in a measurement object including measurement ions and non-measurement ions to obtain a concentration of the measurement ions. The ion concentration measurement device includes a measurement object electrode disposed in the measurement object to control a potential of the measurement object; a measurement object power supply that applies a voltage to the measurement object electrode; a measurement sensor unit including a measurement ion sensitive film that generates a voltage corresponding to the concentration of the measurement ions; a measurement film electrode disposed in the measurement ion sensitive film to control a potential of the measurement ion sensitive film; a measurement film power supply that applies a voltage to the measurement film electrode; a potential difference generation unit connected to the measurement object electrode and the measurement film electrode to generate a potential difference between the measurement object electrode and the measurement film electrode; and a power supply control unit that controls a magnitude of the voltage output from the measurement object power supply, and that controls a magnitude of the voltage output from the measurement film power supply.

The ion concentration measurement device generates the potential difference between the measurement object electrode disposed in the measurement object and the measurement film electrode disposed in the measurement ion sensitive film of the measurement sensor unit. The entry of the non-measurement ions into the measurement ion sensitive film is suppressed by an electric field based on the potential difference. Further, the potential difference between the measurement object electrode and the measurement film electrode can also be generated by the measurement object power supply and the measurement film power supply. The potential difference between the measurement object electrode and the measurement film electrode can also be generated by the potential difference generation unit. The ion concentration measurement device does not necessarily need to use the measurement object power supply and the measurement film power supply to generate the potential difference between the measurement object electrode and the measurement film electrode. As a result, the ion concentration measurement device can reduce energy required to suppress drift caused by the entry of the measurement ions. Therefore, the ion concentration measurement device can obtain good output with suppressed drift over a long period of time.

According to the invention. the potential difference generation unit of the ion concentration measurement device is a capacitor. According to this configuration, the amount of energy consumption for suppressing the occurrence of drift can be suppressed.

According to the invention, the power supply control unit of the ion concentration measurement device mutually switches between a first operation of generating a first potential difference between the measurement object electrode and the measurement film electrode using the measurement object power supply and the measurement film power supply and a second operation of generating a second potential difference between the measurement object electrode and the measurement film electrode using the potential difference generation unit. According to the second operation, a potential difference for suppressing drift is generated without using the measurement object power supply and the measurement film power supply. Therefore, the amount of energy consumption by the measurement object power supply and the measurement film power supply can be suppressed.

The power supply control unit of the ion concentration measurement device may allow the measurement sensor unit to output the voltage corresponding to the concentration of the measurement ions when the first operation is performed. The power supply control unit may prohibit the measurement sensor unit from outputting the voltage corresponding to the concentration of the measurement ions when the second operation is performed. According to these operations, during measurement in which the output of the voltage corresponding to the concentration of the measurement ions is allowed, the first potential difference can be generated using the measurement object power supply and the measurement film power supply. During non-measurement in which the output of the voltage corresponding to the concentration of the measurement ions is prohibited, the second potential difference can be generated using the potential difference generation unit.

When the first operation is performed, the power supply control unit of the ion concentration measurement device may perform a measurement operation of allowing the measurement sensor unit to output the voltage corresponding to the concentration of the measurement ions and a charging operation of charging the potential difference generation unit in parallel. According to this operation, the measurement operation and the charging operation can be performed simultaneously.

In the ion concentration measurement device, the second potential difference may be equal to the first potential difference. According to this setting, voltage control can be simplified.

When the first operation is performed, the power supply control unit of the ion concentration measurement device may perform one of a measurement operation of allowing the measurement sensor unit to output the voltage corresponding to the concentration of the measurement ions and a charging operation of charging the potential difference generation unit, before the other. According to this operation, the timing of the measurement operation and the timing of the charging operation are allowed to deviate from each other.

In the ion concentration measurement device, the second potential difference may be different from the first potential difference. According to this setting, the first potential difference can be set to a value suitable for measurement, and the second potential difference can be set to a value suitable for suppressing drift over a long period of time.

According to the invention. the measurement sensor unit of the ion concentration measurement device is an ion sensitive field effect transistor including a substrate, an insulating film provided on the substrate, and the measurement ion sensitive film provided on the insulating film. According to this configuration, an output voltage corresponding to the ion concentration can be obtained.

In the ion concentration measurement device, when the first operation is performed, a voltage may be applied between a source and a drain of the ion sensitive field effect transistor. When the second operation is performed, the drain and the source of the ion sensitive field effect transistor may be connected to a first reference potential portion. According to the first operation, an output voltage corresponding to the ion concentration can be obtained. According to the second operation, the influence of noise introduced from the outside during a period in which no measurement is performed can be suppressed.

In the ion concentration measurement device, when the second operation is performed, the measurement film electrode may be connected to a second reference potential portion. With this operation as well, the influence of noise introduced from the outside during a period in which no measurement is performed can be suppressed.

In the ion concentration measurement device, a potential of the first reference potential portion may be the same as a potential of the second reference potential portion. With a simple circuit configuration, the influence of noise introduced from the outside can be suppressed.

**Advantageous Effects of Invention**

According to the present invention, the ion concentration measurement device capable of obtaining good output over a long period of time is provided.

**Brief Description of Drawings**

FIG. 1 is a diagram showing a configuration of an ion concentration measurement device of a first embodiment.

FIG. 2 is an enlarged diagram showing an ion sensitive film shown in FIG. 1.

FIG. 3 is a time chart showing the operation of the ion concentration measurement device of the first embodiment.

FIG. 4 is a circuit diagram of the ion concentration measurement device shown in FIG. 1.

FIG. 5 is a diagram showing a circuit configuration when the ion concentration measurement device shown in FIG. 3 performs a measurement operation and a charging operation.

FIG. 6 is a diagram showing a circuit configuration when the ion concentration measurement device shown in FIG. 3 performs a storage operation.

FIG. 7 is a flowchart showing the operation of the ion concentration measurement device of the first embodiment.

FIG. 8 is a time chart showing the operation of an ion concentration measurement device of a second embodiment.

FIG. 9 is a circuit diagram of the ion concentration measurement device of the second embodiment.

FIG. 10 is a diagram showing a circuit configuration when the ion concentration measurement device shown in FIG. 9 performs a measurement operation.

FIG. 11 is a diagram showing a circuit configuration when the ion concentration measurement device shown in FIG. 9 performs a charging operation.

FIG. 12 is a diagram showing a circuit configuration when the ion concentration measurement device shown in FIG. 9 performs a storage operation.

FIG. 13 is a flowchart showing the operation of the ion concentration measurement device of the second embodiment.

FIG. 14 is a diagram showing a configuration of an ion concentration measurement device of a modification example.

## Description of Embodiments

Hereinafter, modes for carrying out the present invention will be described in detail with reference to the accompanying drawings. In the description of the drawings, the same elements are denoted by the same reference signs, and duplicate descriptions will be omitted.

[First embodiment]

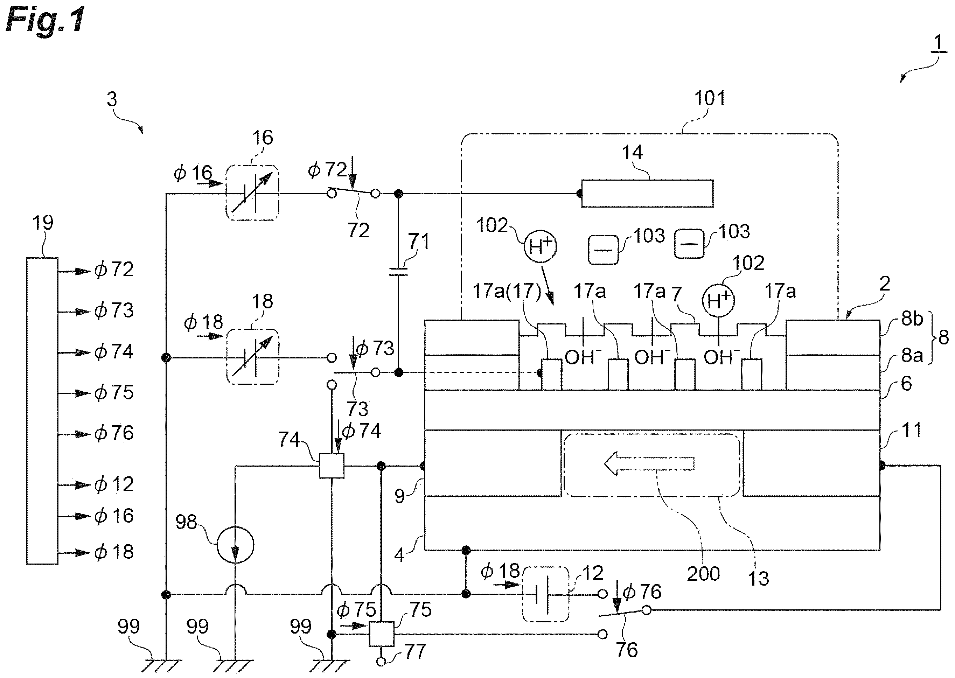

An ion concentration measurement device shown in FIG. 1 is disposed in a measurement object 101 that is, for example, soil. In the following description, the ion concentration measurement device is referred to as a "pH sensor 1". The pH sensor 1 obtains a concentration of hydrogen ions that are measurement ions 102. In the following description, the concentration of hydrogen ions is referred to as "pH". The measurement object 101 includes the measurement ions 102 and non-measurement ions 103. As described above, hydrogen ions are provided as an example of the measurement ions 102. Hydroxide ions or the like are provided as an example of the non-measurement ions 103. The pH sensor 1 includes an ion sensitive field effect transistor (ISFET). A material that specifically adsorbs the measurement ions 102 is provided as a sensitive film at a gate of a MOSFET of the pH sensor 1 including the ISFET. The pH sensor 1 obtains a change in voltage caused by a difference in the adsorption density of the measurement ions 102. According to this configuration, the pH sensor 1 can be disposed directly in soil. According to this configuration, the pH sensor 1 can be made smaller and more accurate.

The pH sensor 1 includes a measurement ISFET 2 (measurement sensor unit) and a power supply unit 3 as main components.

The measurement ISFET 2 includes a substrate 4, an insulating film 6, a measurement ion sensitive film 7 (ion capturing film), and a protection film 8. The substrate 4 is made of, for example, n-type silicon. A source 9 and a drain 11 are provided on portions of the substrate 4. The source 9 is p-type. The drain 11 is also p-type. A potential of the source 9 is the same as a potential of the substrate 4. The drain 11 is electrically connected to the substrate 4. A substrate power supply 12 provides a drain voltage to the measurement ISFET 2. The drain voltage is a potential difference between the source 9 and the drain 11.

The insulating film 6 is provided on a main surface of the substrate 4. The main surface of the substrate 4 includes a main surface of the source 9, a main surface of the drain 11, and a main surface of a channel 13. The insulating film 6 is made of, for example, silicon oxide ($SiO_2$). The insulating film 6 is covered with the measurement ion sensitive film 7 and the protection film 8. The measurement ion sensitive film 7 and the protection film 8 are provided on a main surface of the insulating film 6. The measurement ion sensitive film 7 is provided on the channel 13 via the insulating film 6. The measurement ion sensitive film 7 functions as a gate in the FET. The measurement ion sensitive film 7 is in direct contact with the measurement object 101. The measurement ion sensitive film 7 selectively captures the measurement ions 102 included in the measurement object 101. The measurement ions 102 are hydrogen ions. Therefore, the material of the measurement ion sensitive film 7 has OH groups, which promote specific adsorption of hydrogen ions, on the film surface. For example, $Si_3N_4$, $Ta_2O_5$, or the like may be used for the measurement ion sensitive film 7. The protection film 8 is provided on the main surface of the insulating film 6 which is not covered with the measurement ion sensitive film 7. As the protection film 8, for example, a silicon oxide film 8a (SiOx) and a silicon nitride film 8b (SiNx) may be used.

The power supply unit 3 includes a measurement object electrode 14, a measurement object power supply 16, a measurement film electrode 17, a measurement film power supply 18, and a power supply control unit 19. The power supply unit 3 further includes components such as a capacitor 71, and the components will be described in detail later.

A positive pole of the measurement object power supply 16 is electrically connected to the measurement object electrode 14. A negative pole of the measurement object power supply 16 is electrically connected to a reference potential portion 99. The reference for the voltage of the measurement object power supply 16 is a reference potential. The substrate 4 and the source 9 are also connected to the reference potential portion 99. Therefore, the reference for the voltage of the measurement object power supply 16 is the potential of the source 9 or the potential of the substrate 4. In the following description, the reference for the voltage of the measurement object power supply 16 will be described as being the potential of the source 9.

The measurement object electrode 14 and the measurement object power supply 16 keep a difference between the potential of the source 9 and a potential of the measurement object 101 constant. In other words, the measurement object electrode 14 and the measurement object power supply 16 keep the potential of the measurement object 101 constant with reference to the potential of the source 9. In the following description, the difference between the potential of the source 9 and the potential of the measurement object 101 is referred to as a "measurement object voltage ($V_T$)". The measurement object voltage ($V_T$) may be referred to as a reference voltage. The measurement object electrode 14 is disposed in the measurement object 101. For example, when the measurement object 101 is soil, the measurement object electrode 14 is disposed in the soil. The measurement object electrode 14 applies the measurement object voltage ($V_T$) to the measurement object 101. The measurement object voltage ($V_T$) is output from the measurement object power supply 16 connected to the measurement object electrode 14. The measurement object power supply 16 controls the measurement object voltage ($V_T$) in response to a signal $\phi16$ output from the power supply control unit 19. The measurement object voltage ($V_T$) is variable.

A positive pole of the measurement film power supply 18 is electrically connected to the measurement film electrode 17. A negative pole of the measurement film power supply 18 is electrically connected to the reference potential portion 99. Therefore, the reference for the voltage of the measurement film power supply 18 is the reference potential. The substrate 4 and the source 9 are also connected to the reference potential portion 99. Therefore, the reference for the voltage of the measurement film power supply 18 is the potential of the source 9 or the potential of the substrate 4. The reference for the voltage of the measurement film power supply 18 is a potential of the measurement object power supply 16. The respective references for the voltage of the substrate 4, the voltage of the source 9, the voltage of the measurement object power supply 16, and the voltage of the measurement film power supply 18 are the reference potential. Therefore, the respective references for the voltage of the substrate 4, the voltage of the source 9, the voltage of the measurement object power supply 16, and the voltage of the measurement film power supply 18 are common to each other. The measurement film power supply 18 controls an output voltage in response to a signal $\phi18$ output from the power supply control unit 19.

The measurement film electrode 17 and the measurement film power supply 18 control the voltage of the measurement ion sensitive film 7. The pH sensor 1 actively controls the voltage of the measurement ion sensitive film 7. The voltage of the measurement ion sensitive film 7 is a difference between the potential of the measurement object 101 and a potential of the measurement ion sensitive film 7. In the following description, the difference between the potential of the measurement object 101 and the potential of the measurement ion sensitive film 7 is referred to as a "film voltage ($V_F$)". The potential of the measurement ion sensitive film 7 is the sum of a potential applied from the measurement film electrode 17 and a potential generated due to the measurement ions 102 being captured by the measurement ion sensitive film 7. In the following description, the potential applied from the measurement film electrode 17 is referred to as a "film control voltage ($V_C$)". The reference for the film control voltage (Vc) is the potential of the source 9. The measurement film electrode 17 and the measurement film power supply 18 control the film control voltage ($V_C$).

The measurement film electrode 17 is disposed inside the measurement ion sensitive film 7. The measurement film electrode 17 is embedded in the measurement ion sensitive film 7. The measurement film electrode 17 has a band shape. In other words, the measurement film electrode 17 has a stripe shape. The measurement film electrode 17 includes a plurality of electrode ridges 17a. The plurality of electrode ridges 17a are electrically connected to each other. The potentials of the plurality of electrode ridges 17a are the same. The electrode ridges 17a are in contact with the main surface of the insulating film 6. The electrode ridges 17a extend in a predetermined direction. The predetermined direction is orthogonal to a direction of a drain current 200 flowing from the source 9 toward the drain 11. The electrode ridges 17a are spaced apart from each other along the direction of the drain current 200. Portions of the measurement ion sensitive film 7 and the electrode ridges 17a are alternately disposed along the direction of the drain current 200. For example, a spacing between the electrode ridges 17a adjacent to each other is 600 nm. Tip surfaces of the electrode ridges 17a are covered with the measurement ion sensitive film 7. The tip surfaces of the electrode ridges 17a are not exposed to the measurement object 101. The tip surfaces of the electrode ridges 17a are not in direct contact with the measurement object 101.

It will be described that the suppression of drift is achieved by the above-described configuration. An output of the pH sensor 1 is based on a gate voltage ($V_G$). The gate voltage ($V_G$) is expressed by the following equation (1). Namely, the gate voltage ($V_G$) is the sum of the measurement object voltage ($V_T$) and the film voltage ($V_F$).

[Number 1]

$$V_G = V_T + V_F \cdots (1)$$

The film voltage ($V_F$) is based on a potential generated due to hydrogen ions being captured by the measurement ion sensitive film 7. A "pH-dependent voltage ($V_{PH}$)" is defined based on this potential. The reference for the pH-dependent voltage ($V_{PH}$) may be, for example, the potential of the source 9. Then, Equation (1) is expressed as Equation (2).

[Number 2]

$$V_G = V_T + V_{PH} \cdots (2)$$

As described above, when hydroxide ions enter the measurement ion sensitive film 7, the potential of the measurement ion sensitive film 7 changes depending on the number of the hydroxide ions. A "drift voltage ($V_D$)" is defined based on a potential caused by the hydroxide ions that have entered. "Drift" means that the output voltage of the measurement ISFET 2 changes as a result of charges being accumulated in the measurement ion sensitive film 7 due to the non-measurement ions 103 penetrating into the measurement ion sensitive film 7 over time. The reference for the drift voltage ($V_D$) may be, for example, the potential of the source 9. When the drift voltage ($V_D$) is taken into consideration, the gate voltage ($V_G$) is expressed as Equation (3).

[Number 3]

$$V_G = V_T + V_{PH} + V_D \cdots (3)$$

The drift voltage ($V_D$) depends on the number of hydroxide ions that have entered. When the number of entering hydroxide ions increases over time, the drift voltage ($V_D$) increases. As a result, even when the measurement object voltage ($V_T$) and the pH-dependent voltage ($V_{PH}$) are constant, the gate voltage ($V_G$) changes due to a variation in the drift voltage ($V_D$). Namely, the output of the pH sensor 1A changes. The change in the output of the pH sensor 1A caused by the drift voltage ($V_D$) is referred to as "drift".

As a result of intensive examination on the above-described problem, the inventors have come up with the idea that if the cause of drift is the entry of the non-measurement ions 103, the drift can be suppressed by suppressing the entry of the non-measurement ions 103. The pH sensor 1 suppresses the entry of the non-measurement ions 103 by actively controlling the film voltage ($V_F$) of the measurement ion sensitive film 7.

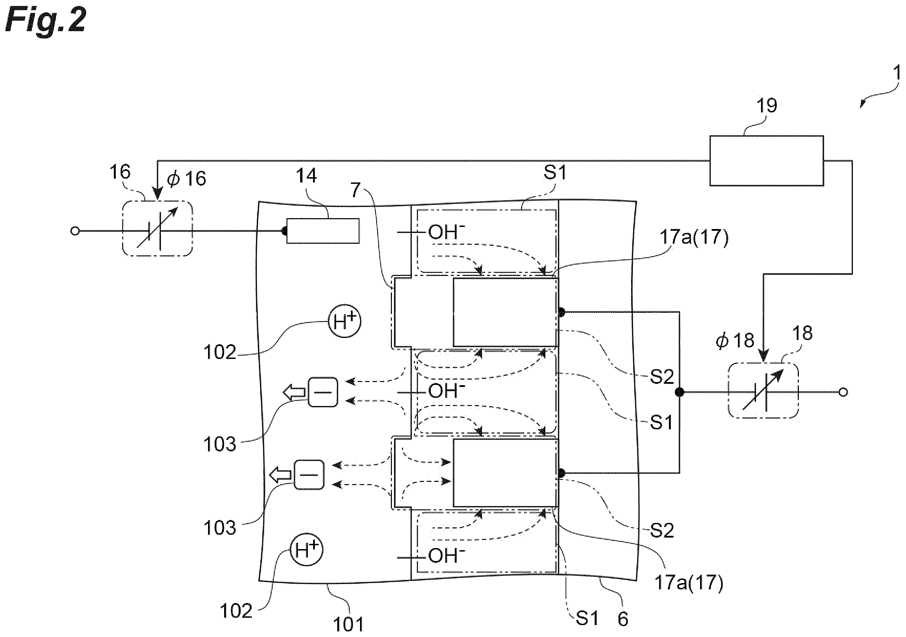

As shown in FIG. 2, the pH sensor 1 includes the measurement film electrode 17 embedded in the measurement ion sensitive film 7. The measurement film electrode 17 provides the film control voltage ($V_C$). The measurement film electrode 17 is closer to the measurement object 101 than a drain electrode. Therefore, the film voltage ($V_F$) can be defined as the sum of the film control voltage ($V_C$) and the pH-dependent voltage ($V_{PH}$) ($V_F = V_C + V_{PH}$). The film control voltage ($V_C$) is a bias voltage that actively sets the reference for the gate voltage ($V_G$). The measurement ISFET 2 operates when the gate voltage ($V_G$) is equal to or greater than a threshold voltage ($V_{TH}$). Therefore, the film control voltage ($V_C$) is set to be equal to or greater than the threshold voltage ($V_{TH}$). A variation in voltage with reference to the film control voltage ($V_C$) is the pH-dependent voltage ($V_{PH}$). The pH-dependent voltage ($V_{PH}$) corresponds to the captured measurement ions 102.

According to this definition, the film control voltage ($V_C$) is set to a value that satisfies the following equation (4). In other words, the film control voltage ($V_C$) is smaller than the measurement object voltage ($V_T$). In further other words, the film control voltage ($V_C$) is smaller than the film voltage ($V_F$). In addition, if the measurement object 101 is used as a reference, the measurement ion sensitive film 7 is negatively charged. For example, when the measurement object voltage ($V_T$) is 500 mV, the film control voltage ($V_C$) is 0 mV.

[Number 4]

$$V_T > V_F = V_C + V_{PH} > V_{TH} \cdots (4)$$

The measurement ion sensitive film 7 in which the measurement film electrode 17 is embedded includes a sensitive region S1 and an electrode region S2. The sensitive region S1 is formed between the electrode ridges 17a. The sensitive region S1 does not include the electrode ridge 17a in a thickness direction of the measurement ion sensitive film 7. According to the sensitive region S1, a change in potential occurring due to the measurement ions 102 being captured on a main surface of the sensitive region S1 can be obtained. The change in potential is a change in the pH-induced voltage ($V_{PH}$).

The electrode region S2 includes the electrode ridge 17a. The electrode region S2 includes a portion of the measurement ion sensitive film 7 and the electrode ridge 17a in the thickness direction of the measurement ion sensitive film 7. When the film control voltage ($V_C$) is applied to the electrode ridge 17a, an electric field indicated by broken arrows in FIG. 2 is generated inside the measurement ion sensitive film 7. Specifically, an electric field is generated in a portion of the measurement ion sensitive film 7 on the main surface of the electrode ridge 17a and in the sensitive region S1.

When the film control voltage ($V_C$) satisfies the above-described equation (4), the electric field caused by the film control voltage ($V_C$) exerts a repulsive force on the non-measurement ions 103 having a negative charge. The repulsive force hinders the approach of the non-measurement ions 103 to the measurement ion sensitive film 7. Namely, it becomes difficult for the non-measurement ions 103 to approach the measurement ion sensitive film 7. Therefore, the entry of the non-measurement ions 103 into the measurement ion sensitive film 7 is suppressed. As a result, the drift voltage ($V_D$) included in Equation (3) does not change, so that no drift occurs. Therefore, the gate voltage ($V_G$) is stabilized.

In short, the voltage of a solution in the pH sensor 1 is based on the measurement object voltage ($V_T$) applied from the measurement object power supply 16. The film voltage ($V_F$) of the measurement ion sensitive film 7 is based on the pH-dependent voltage ($V_{PH}$) corresponding to the captured measurement ions 102 and on the film control voltage ($V_C$) applied from the measurement film power supply 18. The power supply control unit 19 controls a relationship between the measurement object voltage ($V_T$) output by the measurement object power supply 16 and the film control voltage ($V_C$) output by the measurement film power supply 18. Specifically, the power supply control unit 19 controls the measurement film power supply 18 such that a polarity of the film control voltage ($V_C$) with respect to the measurement object voltage ($V_T$) is the same as a polarity of the non-measurement ions 103. According to the relationship between the measurement object voltage ($V_T$) and the film control voltage ($V_C$), the non-measurement ions 103 are not attracted to the measurement ion sensitive film 7. As a result, a drift in the output of the measurement ISFET 2 occurring due to the non-measurement ions 103 entering the measurement ion sensitive film 7 can be suppressed. Therefore, the pH sensor 1 can stably obtain pH over a long period of time.

[Drift suppression and charging circuit and storage circuit]

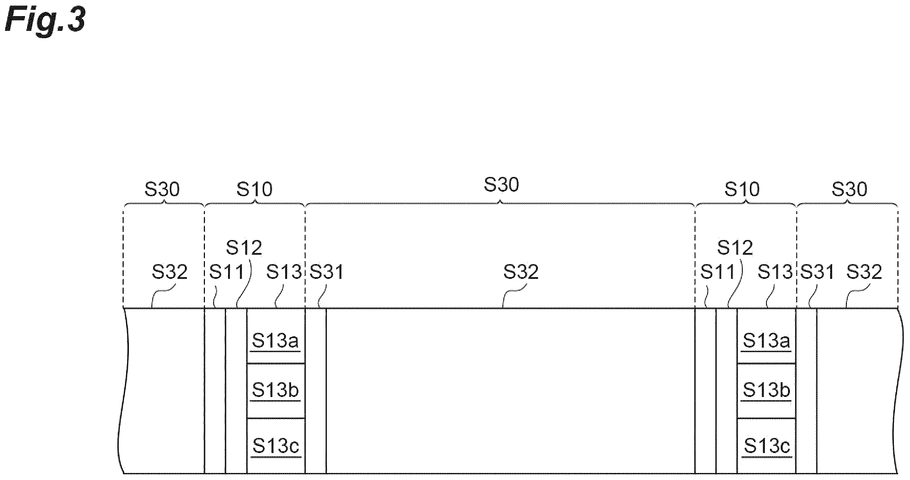

The pH sensor 1 shown in FIG. 1 performs, for example, the operation shown in FIG. 3. First, the pH sensor 1 performs an operation of measuring an ion concentration (hereinafter, referred to as a "measurement operation S10"). The period of the measurement operation S10 is, as one example, two seconds. Next, the pH sensor 1 performs an operation of not measuring an ion concentration (hereinafter, referred to as a "storage operation S30"). The period of the storage operation S30 is, as one example, 900 seconds. The pH sensor 1 alternately performs the measurement operation S10 and the storage operation S30.

A circuit of the pH sensor 1 when the storage operation S30 is performed is different from a circuit of the pH sensor 1 when the measurement operation S10 is performed. Hereinafter, the circuit of the pH sensor 1 when the measurement operation S10 is performed is referred to as a "drift suppression and charging circuit" The circuit of the pH sensor 1 when the storage operation S30 is performed is referred to as a "storage circuit". The drift suppression and charging circuit and the storage circuit will be described in detail below.

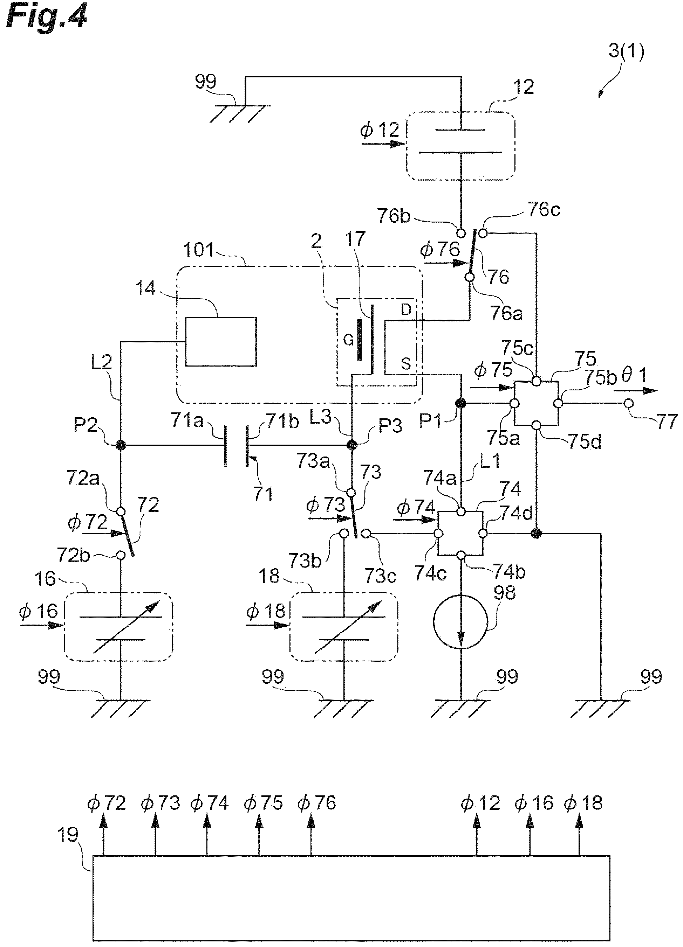

As shown in FIG. 4, the power supply unit 3 includes the capacitor 71 (potential difference generation unit), a measurement object switch 72, a measurement film switch 73, a ground switch 74, an output switch 75, a substrate switch 76, and a DC current source 98.

The capacitor 71 stores a relationship between the potential of the measurement object 101 and the potential of the measurement ion sensitive film 7 when the storage operation S30 is performed. "Storage" means that the relationship between the potential of the measurement object 101 and the potential of the measurement ion sensitive film 7 when the measurement operation S10 is performed is maintained. More specifically, "storage" means that the relationship of Equation (4) is satisfied when the storage operation S30 is performed. The capacitor 71 generates a potential difference for satisfying the relationship of Equation (4) between the measurement object electrode 14 and the measurement film electrode 17.

A first end 71a of the capacitor 71 is connected to the measurement object electrode 14. The first end 71a of the capacitor 71 included in the pH sensor 1 of the first embodiment is directly connected to the measurement object electrode 14. A switch is not disposed between the first end 71a of the capacitor 71 and the measurement object electrode 14. A second end 71b of the capacitor 71 is connected to the measurement film electrode 17. The second end 71b of the capacitor 71 is also directly connected to the measurement film electrode 17. A switch is also not disposed between the second end 71b of the capacitor 71 and the measurement film electrode 17.

The measurement object switch 72 is disposed between the measurement object electrode 14 and the measurement object power supply 16. The measurement object switch 72 is disposed between the first end 71a of the capacitor 71 and the measurement object power supply 16. The measurement object switch 72 mutually switches between the drift suppression and charging circuit and the storage circuit in response to a signal ɸ72 output by the power supply control unit 19. The measurement object switch 72 connects a terminal 72a to a terminal 72b when the drift suppression and charging circuit is enabled. As a result, when the drift suppression and charging circuit is enabled, the measurement object power supply 16 is connected to the measurement object electrode 14. Further, the measurement object power supply 16 is connected to the capacitor 71. When the storage circuit is enabled, the measurement object switch 72 disconnects the terminal 72a from the terminal 72b. As a result, the measurement object power supply 16 is disconnected from the measurement object electrode 14. The measurement object power supply 16 is also disconnected from the capacitor 71.

The measurement film switch 73 is disposed between the measurement film electrode 17 and the measurement film power supply 18. The measurement film switch 73 is disposed between the second end 71b of the capacitor 71 and the measurement film power supply 18. The measurement film switch 73 mutually switches between the drift suppression and charging circuit and the storage circuit in response to a signal ɸ73 output by the power supply control unit 19. When the drift suppression and charging circuit is enabled, the measurement film switch 73 connects a terminal 73a to a terminal 73b. As a result, when the drift suppression and charging circuit is enabled, the measurement film power supply 18 is connected to the measurement film electrode 17. The measurement film power supply 18 is also connected to the capacitor 71. When the storage circuit is enabled, the measurement film switch 73 connects the terminal 73a to a terminal 73c. As a result, when the storage circuit is enabled, the measurement film power supply 18 is disconnected from the measurement film electrode 17. The measurement film power supply 18 is also disconnected from the capacitor 71. When the storage circuit is enabled, the measurement film electrode 17 is connected to the ground switch 74. The capacitor 71 is also connected to the ground switch 74.

The ground switch 74 is disposed between the measurement ISFET 2 and the reference potential portion 99. More specifically, the ground switch 74 is disposed between the source 9 of the measurement ISFET 2 and the reference potential portion 99. An output end 77 is electrically connected to a wiring L1 that connects the source 9 of the measurement ISFET 2 and the ground switch 74. The output end 77 outputs a voltage $\theta 1$ corresponding to the ion concentration. The DC current source 98 is disposed between the ground switch 74 and the reference potential portion 99. Such a configuration is a so-called source follower circuit.

The ground switch 74 mutually switches between the drift suppression and charging circuit and the storage circuit in response to a signal $\phi 74$ output by the power supply control unit 19. When the drift suppression and charging circuit is enabled, the ground switch 74 connects a terminal 74a to a terminal 74b. As a result, the source 9 of the measurement ISFET 2 is connected to the reference potential portion 99 via the DC current source 98. When the storage circuit is enabled, the ground switch 74 connects the terminal 74a to a terminal 74c. As a result, the source 9 of the measurement ISFET 2 is connected to the measurement film switch 73. When the storage circuit is enabled, the ground switch 74 also connects the terminal 74a to a terminal 74d. As a result, the source 9 of the measurement ISFET 2 is connected to the reference potential portion 99 without passing through the DC current source 98.

The output switch 75 is disposed between the measurement ISFET 2 and the output end 77. The output switch 75 is disposed between the substrate power supply 12 and the reference potential portion 99. The output switch 75 mutually switches between the drift suppression and charging circuit and the storage circuit in response to a signal $\phi 75$ output by the power supply control unit 19. When the drift suppression and charging circuit is enabled, the output switch 75 connects a terminal 75a to a terminal 75b. As a result, the source 9 of the measurement ISFET 2 is connected to the output end 77. When the storage circuit is enabled, the output switch 75 connects a terminal 95a to a terminal 75d. As a result, the source 9 of the measurement ISFET 2 is connected to the reference potential portion 99. When the storage circuit is enabled, the output switch 75 also connects a 75c to the terminal 75d. As a result, the drain 11 of the measurement ISFET 2 is connected to the reference potential portion 99 via the substrate switch 76.

The substrate switch 76 is disposed between the measurement ISFET 2 and the substrate power supply 12. The substrate switch 76 mutually switches between the drift suppression and charging circuit and the storage circuit in response to a signal $\phi 76$ output by the power supply control unit 19. When the drift suppression and charging circuit is enabled, the substrate switch 76 connects a terminal 76a to a terminal 75b. As a result, a positive pole of the substrate power supply 12 is connected to the drain 11 of the measurement ISFET 2. When the storage circuit is enabled, the substrate switch 76 disconnects the terminal 76a from the terminal 75b. As a result, the positive pole of the substrate power supply 12 is disconnected from the drain 11 of the measurement ISFET 2. Further, the substrate switch 76 connects the terminal 76a to a terminal 76c. As a result, the drain 11 of the measurement ISFET 2 is connected to the reference potential portion 99 via the output switch 75.

When the drain 11 of the measurement ISFET 2 is connected to the reference potential portion 99 via the output switch 75, the source 9 of the measurement ISFET 2 is also connected to the reference potential portion 99 via the switch 74. The substrate 4 of the measurement ISFET 2 is always connected to the reference potential portion 99. When the storage circuit is enabled, all of the source 9, the drain 11, and the substrate 4 of the measurement ISFET 2 are connected to the reference potential portion 99. When the storage circuit is enabled, the potential of the source 9, the potential of the drain 11, and the potential of the substrate 4 of the measurement ISFET 2 are the same.

In the above description, each of the measurement object switch 72, the measurement film switch 73, the ground switch 74, the output switch 75, and the substrate switch 76 has been individually described. Next, an overall circuit configuration when the drift suppression and charging circuit is enabled and an overall circuit configuration when the storage circuit is enabled will be described.

[Drift suppression and charging circuit]

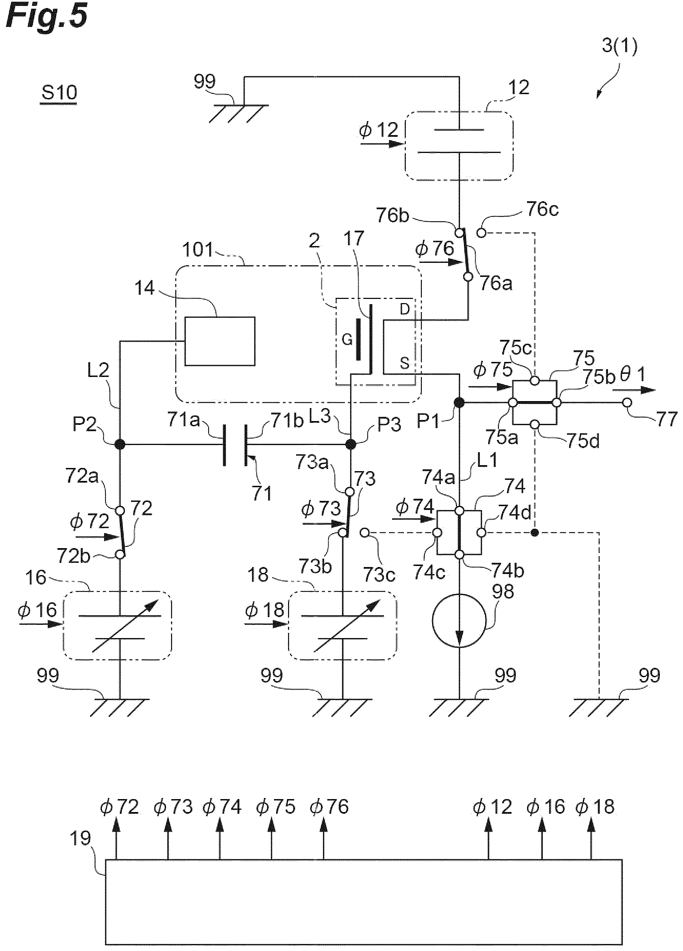

FIG. 5 shows the overall circuit configuration when the drift suppression and charging circuit is enabled. In FIG. 5, a connection line indicated by a broken line indicates portions that do not function when the drift suppression and charging circuit is enabled. The state of each switch when the drift suppression and charging circuit is enabled is as follows.

Measurement object switch 72: connects the measurement object power supply 16 to the measurement object electrode 14, and connects the measurement object power supply 16 to the capacitor 71.

Measurement film switch 73: connects the measurement film power supply 18 to the measurement film electrode 17, and connects the measurement film power supply 18 to the capacitor 71.

Ground switch 74: connects the source 9 of the measurement ISFET 2 to the reference potential portion 99.

Output switch 75: connects the source 9 of the measurement ISFET 2 to the output end 77.

Substrate switch 76: connects the substrate power supply 12 to the drain 11 of the measurement ISFET 2.

According to the above-described states of the switches, a predetermined potential difference is generated between the measurement object electrode 14 and the measurement film electrode 17. As a result, the entry of the non-measurement ions 103 can be suppressed. According to the above-described states of the switches, the capacitor 71 is charged according to a potential difference between the measurement object power supply 16 and the measurement film power supply 18. According to the above-described states of the switches, the source-drain current 200 corresponding to the gate voltage of the measurement ISFET 2 is generated. As a result, the output voltage θ1 corresponding to the source-drain current 200 is provided to the output end 77.

[Storage circuit]

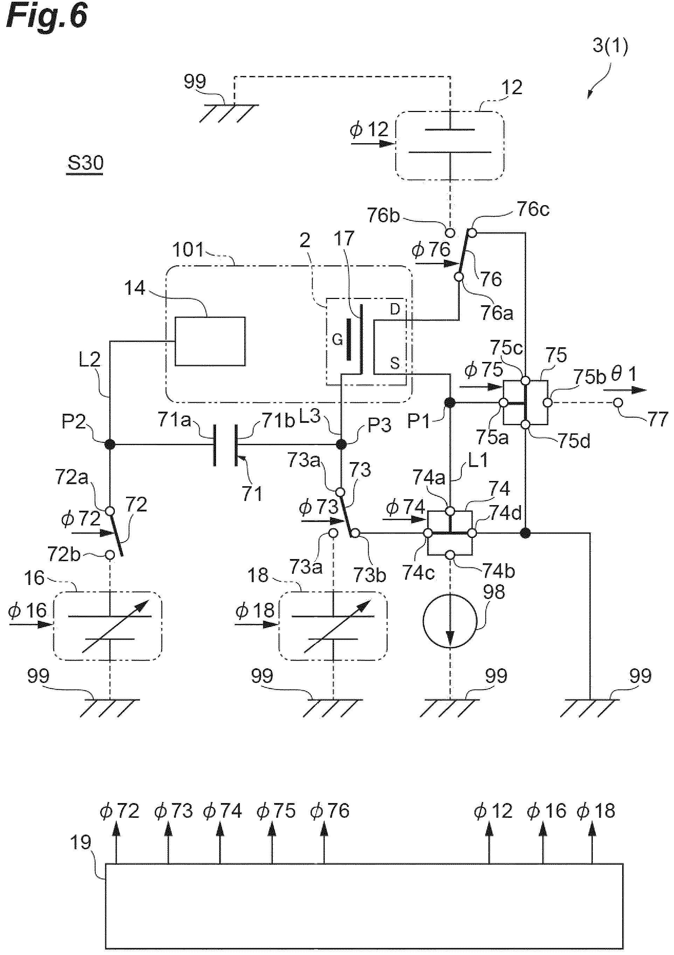

FIG. 6 shows the overall circuit configuration when the storage circuit is enabled. In FIG. 6, a connection line indicated by a broken line indicates portions that do not function when the storage circuit is enabled. The state of each switch when the storage circuit is enabled is as follows.

Measurement object switch 72: disconnects the measurement object power supply 16 from the measurement object electrode 14, and disconnects the measurement object power supply 16 from the capacitor 71.

Measurement film switch 73: disconnects the measurement film power supply 18 from the measurement film electrode 17, disconnects the measurement film power supply 18 from the capacitor 71, connects the measurement film electrode 17 to the ground switch 74, and connects the capacitor 71 to the ground switch 74.

Ground switch 74: connects the measurement film switch 73 to the reference potential portion 99, and connects the source 9 of the measurement ISFET 2 to the reference potential portion 99.

Output switch 75: connects the source 9 of the measurement ISFET 2 to the reference potential portion 99, and connects the substrate switch 76 to the reference potential portion 99.

Substrate switch 76: disconnects the substrate power supply 12 from the drain 11 of the measurement ISFET 2.

According to the above-described states of the switches, a potential difference caused by the charges held by the capacitor 71 can be generated between the measurement object electrode 14 and the measurement film electrode 17.

According to the above-described states of the switches, the second end 71b of the capacitor 71 is connected to the reference potential portion 99. The measurement film electrode 17 is also connected to the reference potential portion 99. The source 9 and the drain 11 of the measurement ISFET 2 are also connected to the reference potential portion 99. Namely, the respective potentials of the measurement film electrode 17, the source 9 of the measurement ISFET 2, and the drain 11 of the measurement ISFET 2 can be made equal to each other.

According to the above-described states of the switches, the source 9 and the drain 11 of the measurement ISFET 2 form a closed circuit system. The closed circuit system is connected to the reference potential portion 99. Therefore, a potential of the closed circuit system is fixed to the reference potential. Therefore, the influence of noise introduced from the outside can be suppressed.

[Operation]

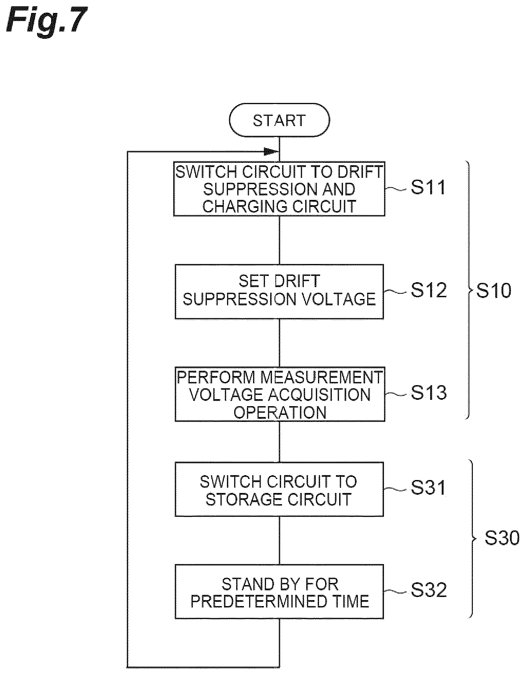

An operation of the pH sensor 1 will be described with reference to a flowchart in FIG. 7.

First, the pH sensor 1 performs the measurement operation (S10). The measurement operation (S10) includes an operation of switching the circuit (S11); an operation of setting a drift suppression voltage (S12); and an operation of obtaining a voltage corresponding to an ion concentration (S13).

Specifically, the pH sensor 1 outputs the signals φ72 to φ77 from the power supply control unit 19. As a result, the pH sensor 1 switches to the drift suppression and charging circuit (refer to FIG. 5) (S11).

Next, the pH sensor 1 performs the operation of setting a drift suppression voltage (S12). The voltage of the measurement object power supply 16 and the voltage of the measurement film power supply 18 are determined according to the polarity of the non-measurement ions 103. For example, it is assumed that the non-measurement ions 103 are hydroxide ions. The hydroxide ions have a negative charge. In this case, the voltage of the measurement object power supply 16 and the voltage of the measurement film power supply 18 are set such that the potential of the measurement ion sensitive film 7 is lower than the potential of the measurement object 101. The drift suppression voltage is determined by the voltage output from the measurement object power supply 16 and the voltage output from the measurement film power supply 18. When the non-measurement ions 103 have a positive charge, the voltage of the measurement object power supply 16 and the voltage of the measurement film power supply 18 are set such that the potential of the measurement ion sensitive film 7 is higher than the potential of the measurement object 101.

For example, when the measurement ions 102 are hydrogen ions, the voltage of the measurement object power supply 16 may be set to 2000 mV. In the pH sensor 1, for example, the voltage of the measurement film power supply 18 may be set to 1500 mV. As a result, a potential difference between the measurement object electrode 14 and the measurement film electrode 17 is 500 mV. The potential of the measurement film electrode 17 is lower than the potential of the measurement object electrode 14 by 500 mV.

The greater the absolute value of the potential difference between the measurement object electrode 14 and the measurement film electrode 17 is, the greater the effect of suppressing the entry of the non-measurement ions 103 is. On the other hand, as shown in Equation (1), the voltage applied to the measurement film electrode 17 (film voltage ($V_T$)) is related to the gate voltage ($V_G$) that affects the output voltage of the pH sensor 1. From the viewpoint of measurement accuracy of the pH sensor 1, it is desirable to be able to accurately calculate the film potential. The film potential is obtained by dividing the output voltage ($\theta1$) by an amplification factor. In order to accurately calculate the film potential, it is preferable that the amplification factor of the measurement ISFET 2 is increased. The gate voltage ($V_G$) affects the amplification factor. Specifically, the more the gate voltage ($V_G$) increases, the more the amplification factor of the pH sensor 1 also increases. In order to increase the gate voltage ($V_G$), the voltage of the measurement film electrode 17 (film voltage ($V_T$)) is set high. For example, the voltage of the measurement film electrode 17 may be set to 1500 mV.

According to such a voltage setting, the influence of noise on the output voltage ($\theta1$) can be suppressed. As a result, the measurement accuracy can be improved.

Next, the operation of obtaining a voltage corresponding to an ion concentration (S13) is performed. The operation S13 includes a drift suppression operation (S13a), a charging operation (S13b), and a measurement voltage acquisition operation (S13c) (refer to FIG. 3).

The pH sensor 1 outputs a predetermined value of voltage from the measurement object power supply 16 by outputting the signal φ16 from the power supply control unit 19. Further, the pH sensor 1 outputs a predetermined value of voltage from the measurement film power supply 18 by outputting the signal φ18 from the power supply control unit 19. The drift suppression operation (S13a) and the charging operation (S13b) are started by outputting these voltages. Namely, in the pH sensor 1 of the first embodiment, the timing that the charging operation (S13b) is started always coincides with the timing that the drift suppression operation (S13a) is started. Incidentally, in the present specification, "charging" refers to a state where the capacitor 71 receives voltages from the measurement object power supply 16 and the measurement film power supply 18. Namely, "charging" has nothing to do with whether the accumulation of charges corresponding to the capacitance of the capacitor 71 is completed or not.

When the output of a voltage from the measurement object power supply 16 is started and the output of a voltage from the measurement film power supply 18 is also started, the effect of suppressing the entry of the non-measurement ions 103 is exhibited. Further, the charging of the capacitor 71 is also started. When a potential difference is generated between the measurement object electrode 14 and the measurement film electrode 17, a potential difference is also generated between the first end 71a and the second end 71b of the capacitor 71. The potential difference generated in the capacitor 71 is equal to the potential difference between the measurement object electrode 14 and the measurement film electrode 17. As a result, the accumulation of charges corresponding to the potential difference occurs. Namely, the capacitor 71 is charged.

The pH sensor 1 outputs a predetermined voltage from the substrate power supply 12 by outputting a signal φ12 from the power supply control unit 19. The measurement voltage acquisition operation (S13c) is started by outputting the voltage. For example, the output voltage of the substrate power supply 12 may be 1500 mV. A state where a source-drain voltage is applied between the source 9 and the drain 11 of the measurement ISFET 2 is formed. In this state, the output voltage θ1 corresponding to the gate voltage of the measurement ISFET 2 is output to the output end 77. The pH sensor 1 continues to output a voltage from the substrate power supply 12 for a predetermined measurement time. The continuation time may be, for example, two seconds. After the continuation time has elapsed, the substrate power supply 12, the measurement object power supply 16, and the measurement film power supply 18 stop outputting a voltage.

It has already been described that the timing that the charging operation (S13b) is started always coincides with the timing that the drift suppression operation (S13a) is started. The timing that these operations are started and the timing that the voltage acquisition operation (S13c) is started may coincide with or may deviate from each other.

For example, as shown in FIG. 3, the drift suppression operation (S13a), the charging operation (S13b), and the voltage acquisition operation (S13c) may be started simultaneously. The substrate power supply 12, the measurement object power supply 16, and the measurement film power supply 18 may start outputting a voltage simultaneously. According to this operation, the drift suppression operation (S13a), the charging operation (S13b), and the voltage acquisition operation (S13c) overlap each other during the entire measurement period.

After the drift suppression operation (S13a) and the charging operation (S13b) are started, the voltage acquisition operation (S13c) may be started. After the measurement object power supply 16 and the measurement film power supply 18 start outputting a voltage, the substrate power supply 12 may start outputting a voltage. According to this operation, a period in which the drift suppression operation (S13a) and the charging operation (S13b) overlap each other occurs. Thereafter, a period in which the drift suppression operation (S13a), the charging operation (S13b), and the voltage acquisition operation (S13c) overlap each other occurs.

Next, the pH sensor 1 starts a storage operation (S30). Specifically, first, the pH sensor 1 outputs the signals φ72 to φ77 from the power supply control unit 19. As a result, the circuit is switched from the drift suppression and charging circuit (refer to FIG. 5) to the storage circuit (refer to FIG. 6) (S31). The element that generates the potential difference between the measurement object electrode 14 and the measurement film electrode 17 is switched by switching from the drift suppression and charging circuit to the storage circuit. Specifically, the element that generates the potential difference between the measurement object electrode 14 and the measurement film electrode 17 is switched from the measurement object power supply 16 and the measurement film power supply 18 to the capacitor 71. The capacitor 71 generates the same potential difference between the measurement object electrode 14 and the measurement film electrode 17 as during measurement. Specifically, the capacitor 71 generates a potential difference of 500 mV by which the potential of the measurement film electrode 17 is lower than the potential of the measurement object electrode 14.

When the storage circuit is enabled, the supply of energy from the outside to maintain the potential difference between the measurement object electrode 14 and the measurement film electrode 17 is not required. The reason is that when the storage circuit is enabled, the measurement object electrode 14 and the measurement film electrode 17 are electrically insulated from each other. Therefore, the charges accumulated in the capacitor 71 are not movable in principle between the measurement object electrode 14 and the measurement film electrode 17. As a result, no discharge from the capacitor 71 occurs in principle. Therefore, the state of the charges accumulated in the capacitor 71 is maintained. As a result, the potential difference between the measurement object electrode 14 and the measurement film electrode 17 can be maintained without requiring the supply of energy from the outside.

When the storage circuit is enabled, a potential difference is generated between the measurement object electrode 14 and the measurement film electrode 17. However, the measurement object electrode 14 and the measurement film electrode 17 are electrically insulated from each other. Therefore, no current flows between the measurement object electrode 14 and the measurement film electrode 17. The source 9 and the drain 11 of the measurement ISFET 2 are short-circuited by the ground switch 74 and the output switch 75. Closed circuits formed by the short circuit are connected to the reference potential portion 99. Therefore, when the storage circuit is enabled, no current continues to flow in these closed circuits. As a result, the life span of the pH sensor 1 can be extended.

The pH sensor 1 maintains the configuration of the storage circuit for a predetermined storage time (S32). The storage time may be, for example, 900 seconds. After the storage time has elapsed, the pH sensor 1 performs an operation of performing switching from the storage circuit to the drift suppression and charging circuit (S11).

[Actions and effects]

A pH sensor 1 that is an ion concentration measurement device is installed in a measurement object 101 including measurement ions 102 and non-measurement ions 103. The pH sensor 1 obtains a concentration of the measurement ions 102. The pH sensor 1 includes a measurement object electrode 14 disposed in the measurement object 101 to control a potential of the measurement object; a measurement object power supply 16 that applies a voltage to the measurement object electrode 14; a measurement ISFET 2 including a measurement ion sensitive film 7 that generates a voltage corresponding to the concentration of the measurement ions 102; a measurement film electrode 17 disposed in the measurement ion sensitive film 7 to control a potential of the measurement ion sensitive film 7; a measurement film power supply 18 that applies a voltage to the measurement film electrode 17; a capacitor 71 connected to the measurement object electrode 14 and the measurement film electrode 17 to generate a potential difference between the measurement object electrode 14 and the measurement film electrode 17; and a power supply control unit 19 that controls a magnitude of the voltage output from the measurement object power supply 16, and that controls a magnitude of the voltage output from the measurement film power supply 18.

The pH sensor 1 generates the potential difference between the measurement object electrode 14 disposed in the measurement object 101 and the measurement film electrode 17 disposed in the measurement ion sensitive film 7 of the measurement ISFET 2. The entry of the non-measurement ions 103 into the measurement ion sensitive film 7 is suppressed by an electric field based on the potential difference. As a result, the drift of a voltage output from the measurement ISFET 2 is suppressed. The potential difference between the measurement object electrode 14 and the measurement film electrode 17 can be generated by the measurement object power supply 16 and the measurement film power supply 18. The potential difference between the measurement object electrode 14 and the measurement film electrode 17 can be generated by the capacitor 71. In order to generate the potential difference between the measurement object electrode 14 and the measurement film electrode 17, the measurement object power supply 16 and the measurement film power supply 18 do not necessarily need to be used. Therefore, energy required to suppress the drift of the output voltage can be reduced. As a result, good output with suppressed drift can be obtained over a long period of time.

For example, when no voltage is applied to the measurement film power supply 18, the operation (threshold voltage) of the measurement ISFET 2 is determined by a potential difference between the measurement object power supply 16 and the substrate 4. When the measurement ISFET 2 is in an ON state, a current flows between the drain 11 and the source 9. Therefore, the voltage of the channel 13 is an intermediate value between the voltage of the drain 11 and the voltage of the source 9. At this time, the voltage of the substrate power supply 12 is greater than the voltage of the measurement object power supply 16 (threshold voltage < voltage of the measurement object power supply 16 < voltage of the substrate power supply 12). As a result, there occurs a possibility that the measurement ISFET 2 cannot sufficiently suppress drift to be described later.

According to the measurement film power supply 18, both a condition for suppressing the drift of the output voltage to be described later and a condition for operating the measurement ISFET 2 can be met. The condition for suppressing the drift of the output voltage is that the voltage of the measurement film power supply 18 is smaller than the voltage of the measurement object power supply 16 (voltage of the measurement film power supply 18 < voltage of the measurement object power supply 16). The condition for operating the measurement ISFET 2 is that the threshold voltage is smaller than the voltage of the measurement film power supply 18 and the voltage of the measurement film power supply 18 is smaller than the voltage of the substrate power supply 12 (threshold voltage < voltage of the measurement film power supply 18 < voltage of the substrate power supply 12). Therefore, according to the measurement film power supply 18, non-uniformity in the measurement ion sensitive film 7 is eliminated. As a result, the suppression of drift is facilitated. Therefore, drift can be sufficiently suppressed. Further, the voltage of the substrate power supply 12 as the voltage of the drain 11 can be set to a desired value.

The pH sensor 1 includes the capacitor 71 as a potential difference generation unit. According to this configuration, energy consumption for suppressing the occurrence of drift can be suppressed.

The power supply control unit 19 mutually switches between a first operation of generating a first potential difference between the measurement object electrode 14 and the measurement film electrode 17 using the measurement object power supply 16 and the measurement film power supply 18 and a second operation of generating a second potential difference between the measurement object electrode 14 and the measurement film electrode 17 using the capacitor 71. According to the second operation, a potential difference for suppressing drift can be generated without using the measurement object power supply 16 and the measurement film power supply 18. Therefore, energy consumption by the measurement object power supply 16 and the measurement film power supply 18 can be suppressed.

The power supply control unit 19 allows the measurement ISFET 2 to output the voltage corresponding to the concentration of the measurement ions 102 when the first operation is performed. The power supply control unit 19 prohibits the measurement ISFET 2 from outputting the voltage corresponding to the concentration of the measurement ions 102 when the second operation is performed. According to these operations, during measurement in which the output of the voltage corresponding to the concentration of the measurement ions 102 is allowed, the measurement object power supply 16 and the measurement film power supply 18 can generate the first potential difference. During non-measurement in which the output of the voltage corresponding to the concentration of the measurement ions 102 is prohibited, the capacitor 71 can generate the second potential difference.

When the first operation is performed, the power supply control unit 19 performs a measurement operation of allowing the measurement ISFET 2 to output the voltage corresponding to the concentration of the measurement ions 102 (S10) and a charging operation of charging the capacitor 71 (S30) in parallel. According to this operation, the measurement operation (S10) and the charging operation (S30) can be performed simultaneously.

The second potential difference is equal to the first potential difference. According to this setting, voltage control can be simplified.

The measurement ISFET 2 is an ion sensitive field effect transistor including a substrate 4, an insulating film 6 provided on the substrate 4, and the measurement ion sensitive film 7 provided on the insulating film 6. According to this configuration, an output voltage corresponding to the ion concentration can be obtained.

When the first operation is performed, a voltage is applied between a source 9 and a drain 11 of the measurement ISFET 2. When the second operation is performed, the source 9 and the drain 11 of the measurement ISFET 2 are connected to a reference potential portion 99. According to the first operation, an output voltage ($\theta$1) corresponding to the ion concentration can be obtained. According to the second operation, the influence of noise introduced from the outside during a period in which no measurement is performed can be suppressed.

When the second operation is performed, the measurement film electrode 17 may be connected to the reference potential portion 99. With this operation as well, the influence of noise introduced from the outside during a period in which no measurement is performed can be suppressed.

A potential of the reference potential portion 99 to which the source 9 and the drain 11 of the measurement ISFET 2 are connected is the same as a potential of the reference potential portion 99 to which the measurement film electrode 17 is connected. With a simple circuit configuration, the influence of noise introduced from the outside can be suppressed.

[Second embodiment]

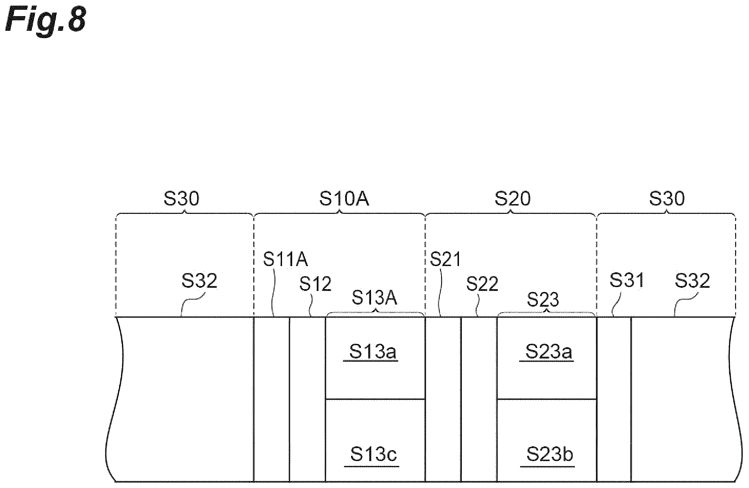

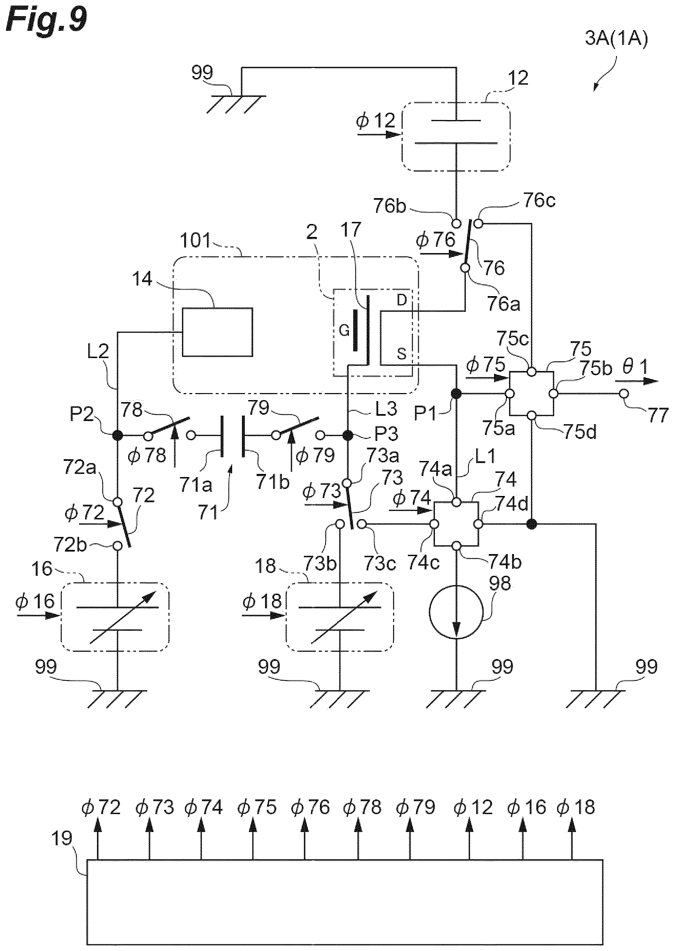

An ion concentration measurement device of a second embodiment will be described. FIG. 8 is a timing chart showing the operation of the ion concentration measurement device (pH sensor 1A: refer to FIG. 9) of the second embodiment.

As described above, in the ion concentration measurement device (pH sensor 1) of the first embodiment, the charging operation (S13b) overlaps the drift suppression operation (S13a). In such an operation, the charging voltage of the capacitor 71 coincides with the voltage of the drift suppression operation (S13a) executed in parallel with the measurement voltage acquisition operation (S13c).

On the other hand, in the pH sensor 1A of the second embodiment, a charging operation (S23b) does not overlap a measurement operation (S10A). In such an operation, the charging voltage of the capacitor 71 does not necessarily coincide with the voltage of the drift suppression operation (S13a) executed in parallel with the measurement voltage acquisition operation (S13c). Therefore, the charging voltage of the capacitor 71 can be set to a value different from that of the voltage of the drift suppression operation (S13a) executed in parallel with the measurement voltage acquisition operation (S13c). In other words, the mode of a potential difference generated using the measurement object power supply 16 and the measurement film power supply 18 and the mode of a potential difference generated using the capacitor 71 can be made different from each other.

FIG. 9 is a circuit diagram of the pH sensor 1A of the second embodiment. As shown in FIG. 9, the pH sensor 1A includes a power supply unit 3A in which capacitor switches 78 and 79 are further added to the configuration of the pH sensor 1.

A connection point P2 is provided on a wiring L2 that connects the measurement object electrode 14 and the measurement object switch 72. The connection point P2 is connected to the first end 71a of the capacitor 71. The capacitor switch 78 is provided between the connection point P2 and the first end 71a of the capacitor 71. The capacitor switch 78 operates based on a signal $\phi 78$ from the power supply control unit 19.

A connection point P3 is provided on a wiring L3 that connects the measurement film electrode 17 and the measurement film switch 73. The connection point P3 is connected to the second end 71b of the capacitor 71. The capacitor switch 79 is provided between the connection point P3 and the second end 71b of the capacitor 71. The capacitor switch 79 operates based on a signal $\phi 79$ from the power supply control unit 19.

When the capacitor switches 78 and 79 are not provided as in the first embodiment, two connection configurations can be realized. A first connection configuration is the drift suppression and charging circuit (refer to FIG. 5). In the first connection configuration, the measurement object electrode 14 and the capacitor 71 are connected to the measurement object power supply 16. Further, in the first connection configuration, the measurement film electrode 17 and the capacitor 71 are connected to the measurement film power supply 18. A second connection configuration is the storage circuit (refer to FIG. 6). In the second connection configuration, the measurement object electrode 14 and the capacitor 71 are disconnected from the measurement object power supply 16. In the second connection configuration, the measurement film electrode 17 and the capacitor 71 are disconnected from the measurement film power supply 18.

When the capacitor switches 78 and 79 are provided as in the second embodiment, a third connection configuration can be realized in addition to the first connection configuration and the second connection configuration. The third connection configuration is a drift suppression circuit. The drift suppression circuit exhibits the function of suppressing drift. However, the drift suppression circuit does not charge the capacitor 71.

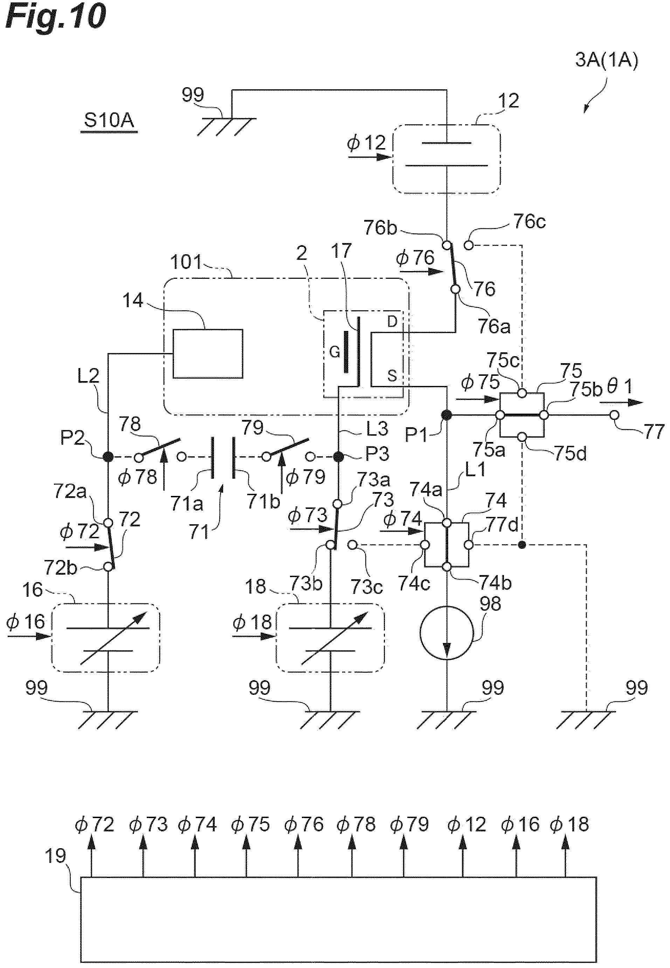

As shown in FIG. 10, in the third connection configuration, the measurement object electrode 14 is connected to the measurement object power supply 16, and the capacitor 71 is disconnected from the measurement object power supply 16. In the third configuration, the measurement film electrode 17 is connected to the measurement film power supply 18, and the capacitor 71 is disconnected from the measurement film power supply 18.

[Drift suppression circuit]

FIG. 10 shows an overall circuit configuration when the drift suppression circuit is enabled. In FIG. 10, a connection line indicated by a broken line indicates portions that do not function when the drift suppression circuit is enabled. The state of each switch when the drift suppression circuit is enabled is as follows.

Measurement object switch 72: connects the measurement object power supply 16 to the measurement object electrode 14.

Measurement film switch 73: connects the measurement film power supply 18 to the measurement film electrode 17.

Ground switch 74: connects the source 9 of the measurement ISFET 2 to the reference potential portion 99.

Output switch 75: connects the source 9 of the measurement ISFET 2 to the output end 77.

Substrate switch 76: connects the substrate power supply 12 to the drain 11 of the measurement ISFET 2.

Capacitor switch 78: disconnects the first end 71a of the capacitor 71 from the connection point P2.

Capacitor switch 79: disconnects the second end 71b of the capacitor 71 from the connection point P3.

According to the third connection configuration, when the measurement voltage acquisition operation (S13c) and the drift suppression operation (S13a) are performed in parallel, the electric power receiving operation (S23b) of the capacitor 71 is not performed. After the measurement voltage acquisition operation (S13c) is completed, the charging operation (S23b) of the capacitor 71 is performed by enabling the first connection configuration.

For example, in the drift suppression operation (S13a) performed simultaneously with the measurement voltage acquisition operation (S13c), a voltage that generates the first potential difference is set. In the third connection configuration, no voltage is applied to the capacitor 71. Therefore, the capacitor 71 is not charged. When the charging operation (S23b) is performed together with the drift suppression operation (S23a) after the measurement voltage acquisition operation (S13c) is completed, a voltage different from that of the drift suppression operation (S13a) can be applied to the capacitor 71. Therefore, the capacitor 71 can be charged based on the voltage different from that of the drift suppression operation (S13a).

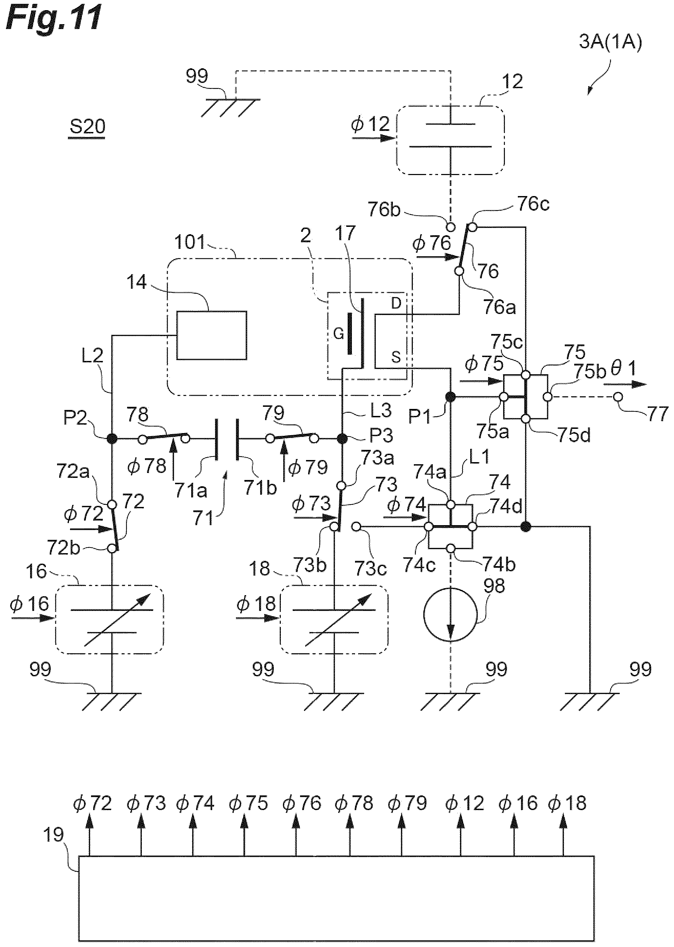

FIG. 11 shows an overall circuit configuration when the drift suppression and charging circuit that is the first connection configuration is enabled. The state of each switch when the drift suppression and charging circuit is enabled is as follows.

Measurement object switch 72: connects the measurement object power supply 16 to the measurement object electrode 14, and connects the measurement object power supply 16 to the capacitor 71.

Measurement film switch 73: connects the measurement film power supply 18 to the measurement film electrode 17, and connects the measurement film power supply 18 to the capacitor 71.

Ground switch 74: connects the source 9 of the measurement ISFET 2 to the reference potential portion 99.

Output switch 75: connects the source 9 of the measurement ISFET 2 to the output end 77.

Substrate switch 76: connects the substrate power supply 12 to the drain 11 of the measurement ISFET 2.

Capacitor switch 78: connects the first end 71a of the capacitor 71 to the connection point P2.

Capacitor switch 79: connects the second end 71b of the capacitor 71 to the connection point P3.

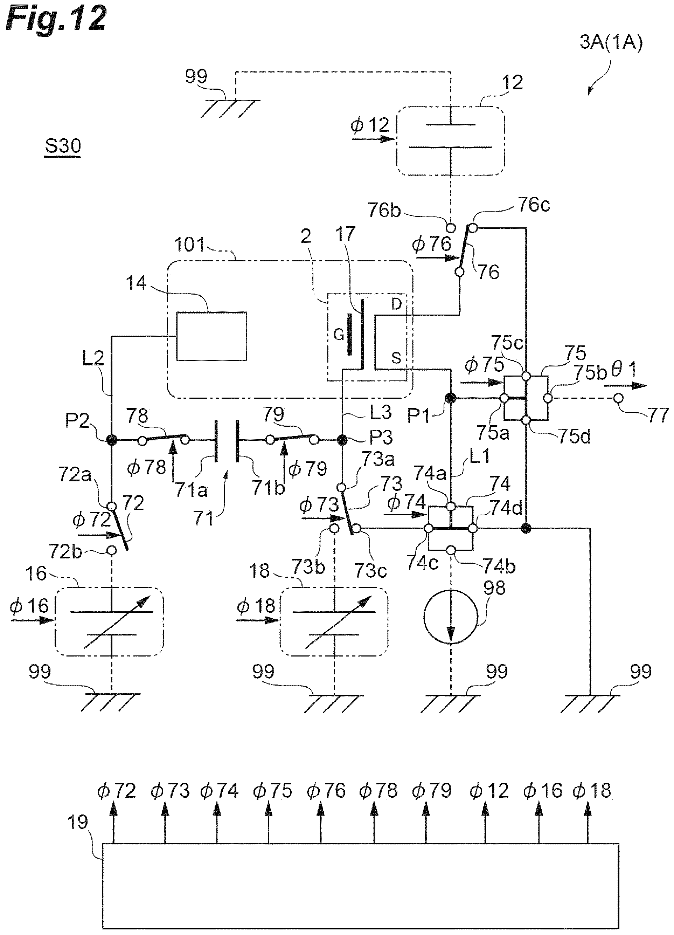

FIG. 12 shows an overall circuit configuration when the storage circuit that is the second connection configuration is enabled. The state of each switch when the charging circuit is enabled is as follows.

Measurement object switch 72: disconnects the measurement object power supply 16 from the measurement object electrode 14, and disconnects the measurement object power supply 16 from the capacitor 71.

Measurement film switch 73: disconnects the measurement film power supply 18 from the measurement film electrode 17, disconnects the measurement film power supply 18 from the capacitor 71, connects the measurement film electrode 17 to the ground switch 74, and connects the capacitor 71 to the ground switch 74.

Ground switch 74: connects the measurement film switch 73 to the reference potential portion 99, and connects the source 9 of the measurement ISFET 2 to the reference potential portion 99.

Output switch 75: connects the source 9 of the measurement ISFET 2 to the reference potential portion 99, and connects the substrate switch 76 to the reference potential portion 99.

Substrate switch 76: disconnects the substrate power supply 12 from the drain 11 of the measurement ISFET 2.

Capacitor switch 78: connects the first end 71a of the capacitor 71 to the connection point P2.

Capacitor switch 79: connects the second end 71b of the capacitor 71 to the connection point P3.

[Operation]

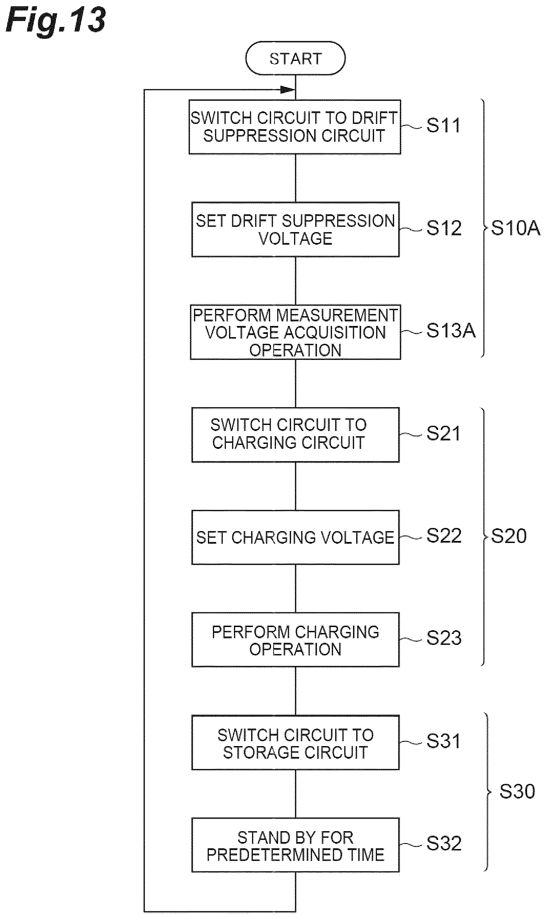

An operation example of the pH sensor 1A of the second embodiment will be described with reference to a flowchart in FIG. 13.

The pH sensor 1A performs the measurement operation (S10A). The measurement operation (S10A) includes an operation of switching the circuit (S11A); the operation of setting a drift suppression voltage (S12A); and an operation of obtaining a voltage corresponding to an ion concentration (S13A).

In the operation of switching the circuit (S11A), the circuit is switched to the drift suppression circuit shown in FIG. 10. Since the operation of setting a drift suppression voltage (S12) is the same as in the first embodiment, a detailed description thereof will be omitted.

Next, the operation of obtaining a voltage corresponding to an ion concentration (S13A) is performed. The operation S13A includes the drift suppression operation (S13a) and the measurement voltage acquisition operation (S13c) (refer to FIG. 8). The operation (S13A) of the second embodiment does not include a charging operation. After a predetermined time has elapsed, the output of voltages from the substrate power supply 12, the measurement object power supply 16, and the measurement film power supply 18 is stopped.

Next, a charging operation (S20) is performed. Specifically, the pH sensor 1A outputs the signals ɸ72 to ɸ79 from the power supply control unit 19. As a result, the circuit is switched from the drift suppression circuit (refer to FIG. 10) to the drift suppression and charging circuit (refer to FIG. 11) (S21). Next, a charging voltage is set (S22). The charging voltage is determined by a voltage output from the measurement object power supply 16 and a voltage output from the measurement film power supply 18. Therefore, in the operation (S20), the voltage output from the measurement object power supply 16 is set by the signal ɸ16. In the operation (S20), the voltage output from the measurement film power supply 18 is set by the signal ɸ18.

Next, the output of the voltage from the measurement object power supply 16 is started, and the output of the voltage from the measurement film power supply 18 is started. As a result, the charging of the capacitor 71 is started. When the drift suppression and charging circuit (FIG. 11) is enabled, the measurement object power supply 16 is connected to the measurement object electrode 14. Further, the measurement film power supply 18 is connected to the measurement film electrode 17. Therefore, the function of suppressing drift also occurs. After a predetermined time has elapsed, the output of the voltages from the measurement object power supply 16 and the measurement film power supply 18 is stopped.

Next, the pH sensor 1 starts the storage operation (S30). Since the storage operation (S30) is the same as in the first embodiment, a detailed description thereof will be omitted.

[Actions and effects]

Similarly to the pH sensor 1 of the first embodiment, the pH sensor 1A of the second embodiment can also obtain good output over a long period of time.

Further, when the first operation is performed, the power supply control unit 19 of the pH sensor 1A performs the measurement operation (S10) out of the measurement operation (S10) of allowing the measurement ISFET 2 to output a voltage corresponding to a concentration of the measurement ions 102 and the charging operation (S20) of charging the capacitor 71 before the charging operation (S20). According to this operation, the timing of the measurement operation (S10) and the timing of the charging operation (S20) are allowed to deviate from each other.

[Modification examples]

Hereinafter, the present invention has been described in detail based on the embodiments. However, the present invention is not limited to the embodiments. The present invention can be modified in various forms without departing from the concept of the present invention.

For example, in the first embodiment, the non-measurement ions 103 have a negative charge. The non-measurement ions 103 may have a positive charge. In this case, the power supply control unit 19 controls at least one of the measurement object power supply 16 and the measurement film power supply 18 such that the film control voltage (VC) is greater than the measurement object voltage (VT). According to this configuration, drift caused by the non-measurement ions 103 having a positive polarity can be suppressed.

In the first embodiment, hydrogen ions have been provided as an example of the measurement ions 102 having a positive charge. The measurement ions 102 may be other ions having a positive charge (positive ions). For example, potassium ions can be provided as an example of the measurement ions 102 having a positive charge. When ions that are a measurement object have a positive charge, the potential of the measurement film electrode 17 may be set to be lower than the potential of the measurement object electrode 14. In the first embodiment, the measurement ions 102 having a positive charge have been provided as an example; however, ions having a negative charge may be a measurement object. Hydroxide ions and chloride ions can be provided as an example of the ions having a negative charge (negative ions). When ions that are a measurement object have a negative charge, the potential of the measurement film electrode 17 may be set to be higher than the potential of the measurement object electrode 14.

The application of the ion concentration measurement device is not limited to measuring the pH of soil. For example, the ion concentration measurement device may be applied to measuring the pH of a culture as an object. The ion concentration measurement device may be applied to measuring the pH of a concrete as an object.

The application of the ion concentration measurement device is not limited to pH measurement. For example, the present invention can be suitably applied to a sensor that adsorbs and desorbs ions in soil, such as a potassium (K) ion sensor.

In the embodiments, a capacitor has been provided as an example of the potential difference generation unit. The potential difference generation unit may adopt another configuration instead of the capacitor. For example, the potential difference generation unit may be a power supply different from the measurement object power supply 16 and the measurement film power supply 18. The potential difference generation unit may be a power supply different from the measurement film power supply 18. For example, a secondary battery, a battery, and a rechargeable battery can be provided as examples of a power supply that can be used as the potential difference generation unit.

In the embodiments, the configuration in which when the storage circuit is enabled, the source 9, the drain 11, and the substrate 4 of the measurement ISFET 2 are connected to the reference potential portion 99 has been provided as an example. In the embodiments, when the storage circuit is enabled, the source 9, the drain 11, and the substrate 4 of the measurement ISFET 2 are at a common potential (for example, ground potential) provided from the reference potential portion 99.

In the pH sensor 1, the source 9 and the substrate 4 do not need to be at the same potential as long as Equation (4) is satisfied. The potential of the source 9 and the potential of the substrate 4 may be the same as in the embodiments, or may be different from each other. Out of these cases, the case where the source 9 and the substrate 4 are at the same potential as in the embodiments is more advantageous than the case where the source 9 and the substrate 4 are at different potentials. Further, when the source 9 and the substrate 4 have the same potential, there can be a case where the potential is fixed as shown in the embodiments and a case where the potential is not fixed.

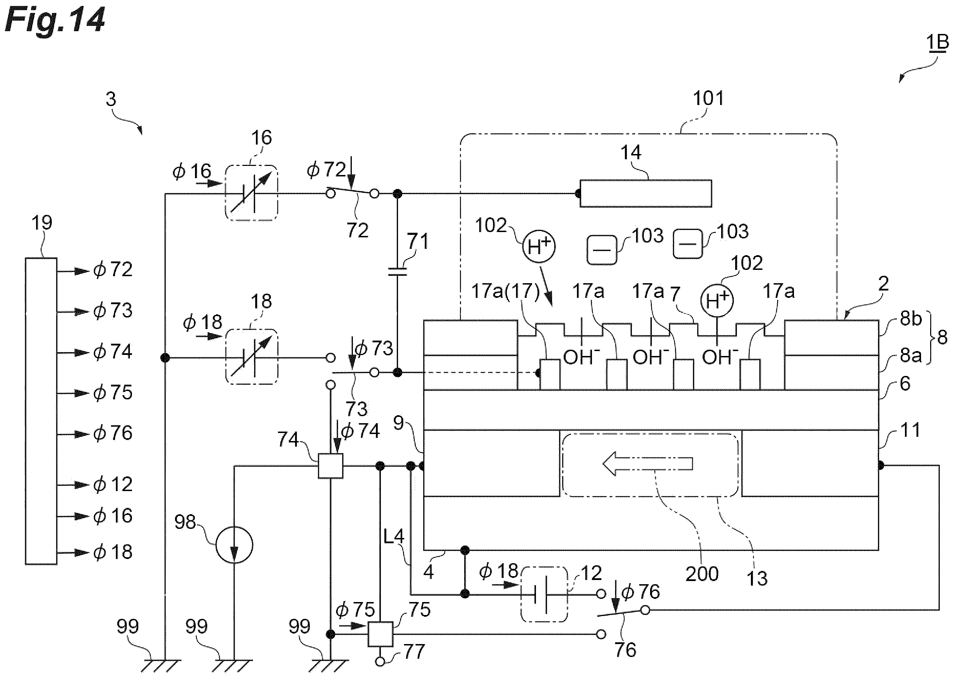

In the embodiments, the source 9 and the substrate 4 are at the same reference potential. If the reference potential is the ground potential, in the embodiments, the polarity of the non-measurement ions 103 by which entry can be suppressed is determined to be negative. Namely, when the polarity of the non-measurement ions 103 is negative, the circuit configuration shown in FIG. 1 can be adopted. On the other hand, the circuit configuration shown in FIG. 1 cannot cope with a case where the polarity of the non-measurement ions 103 is positive. For example, if a circuit configuration such as a pH sensor 1B shown in FIG. 14 is adopted, measurement can be performed not only when the polarity of the measurement ions 102 is positive but also when the polarity is negative.

In the pH sensor 1B shown in FIG. 14, the substrate 4 is directly connected to the source 9 by a wiring L4. According to this connection configuration, the potential of the substrate 4 is always the same as the potential of the source 9. Specifically, when the storage circuit is enabled, the potential of the substrate 4 is the same as the potential of the source 9. Even when the drift suppression and charging circuit is enabled, the potential of the substrate 4 is the same as the potential of the source 9. By appropriately setting connection between the ground switch 74 and the output switch 75, the substrate 4 and the source 9 can be connected to the reference potential portion 99. The substrate 4 and the source 9 can also be disconnected from the reference potential portion 99.

The potential of the substrate 4 of the pH sensor 1B shown in FIG. 14 follows the potential of the source 9. When the drift suppression and charging circuit is enabled (during measurement), the potential of the source 9 is determined according to a source-drain voltage applied by the substrate power supply 12. As a result, the potential of the substrate 4 is determined according to the potential of the source 9. When the storage circuit is enabled (during non-measurement) and the source 9 is disconnected from the reference potential portion 99, the potential of the source 9 is determined according to a voltage applied by the capacitor 71. As a result, the potential of the substrate 4 is determined according to the potential of the source 9. According to this connection configuration, the potential of the substrate 4 and the potential of the source 9 are not fixed to the reference potential. Therefore, the potentials can be set to potentials corresponding to the polarity of the non-measurement ions 103.

**Reference Signs List**

1, 1A: pH sensor, 2: measurement ISFET, 3: power supply unit, 4: substrate, 6: insulating film, 7: measurement ion sensitive film (ion capturing film), 8: protection film, 8a: silicon oxide film, 8b: silicon nitride film, 9: source, 11: drain, 12: substrate power supply, 13: channel, 14: measurement object electrode, 16: measurement object power supply, 17: measurement film electrode, 18: measurement film power supply, 19: power supply control unit, 71: capacitor, 72: measurement object switch, 73: measurement film switch, 74: ground switch, 75: output switch, 76: substrate switch, 77: output end, 78: capacitor switch, 79: capacitor switch, 98: DC current source, 99: reference potential portion, 101: measurement object, 102: measurement ion, 103: non-measurement ion, 200: drain current, S10: measurement operation, S20: charging operation, S30: storage operation.

**Claims**

1.　An ion concentration measurement device (1) installed in a measurement object (101) including measurement ions (102) and non-measurement ions (103) to obtain a concentration of the measurement ions (102), the device (1) comprising:

　　a measurement object electrode (14) disposed in the measurement object (101) to control a potential of the measurement object (101);
　　a measurement object power supply (16) that is connectable to the measurement object electrode (14) via a first switch (72), and that applies a voltage to the measurement object electrode (14);
　　a measurement sensor unit (2) including a measurement ion sensitive film (7) that generates a voltage corresponding to the concentration of the measurement ions (102);
　　a measurement film electrode (17) disposed in the measurement ion sensitive film (7) to control a potential of the measurement ion sensitive film (7);
　　a measurement film power supply (18) that is connectable to the measurement film electrode (17) via a second switch (73), and that applies a voltage to the measurement film electrode (17);
　　a potential difference generation unit (71) connected to the measurement object electrode (14) and the measurement film electrode (17) without passing through the first switch (72) and the second switch (73), to generate a potential difference between the measurement object electrode (14) and the measurement film electrode (17); and
　　a power supply control unit (19) that controls a magnitude of the voltage output from the measurement object power supply (16), and that controls a magnitude of the voltage output from the measurement film power supply (18),

wherein the potential difference generation unit (71) is a capacitor (71), and

wherein the measurement sensor unit (2) is an ion sensitive field effect transistor, ISFET, including a substrate (4), an insulating film (6) provided on the substrate (4), and the measurement ion sensitive film (7) provided on the insulating film (6), and

wherein the power supply control unit (19) mutually switches between a first operation of causing the measurement object power supply (16) and the measurement film power supply (18) to generate a first potential difference between the measurement object electrode (14) and the measurement film electrode (17) by connecting the measurement object power supply (16) to the measurement object electrode (14) through turning on the first switch (72) and by connecting the measurement film power supply (18) to the measurement film electrode (17) through turning on the second switch (73), and a second operation of causing the potential difference generation unit (71) to generate a second potential difference between the measurement object electrode (14) and the measurement film electrode (17) by performing at least one of an operation of disconnecting the measurement object power supply (16) from the measurement object electrode (14) through disconnecting the first switch (72) and an operation of disconnecting the measurement film power supply (18) from the measurement film electrode (17) through disconnecting the second switch (73).

2. The ion concentration measurement device (1) according to claim 1,
wherein the power supply control unit (19) allows the measurement sensor unit (2) to output the voltage corresponding to the concentration of the measurement ions (102) when the first operation is performed, and prohibits the measurement sensor unit (2) from outputting the voltage corresponding to the concentration of the measurement ions (102) when the second operation is performed.

3. The ion concentration measurement device (1) according to claims 1 or 2,
wherein when the first operation is performed, the power supply control unit (19) performs a measurement operation of allowing the measurement sensor unit to output the voltage corresponding to the concentration of the measurement ions (102) and a charging operation of charging the potential difference generation unit (71) in parallel.

4. The ion concentration measurement device (1) according to claim 3,
wherein the second potential difference is equal to the first potential difference.

5. The ion concentration measurement device (1) according to claims 1 or 2,
wherein when the first operation is performed, the power supply control unit (19) performs one of a measurement operation of allowing the measurement sensor unit to output the voltage corresponding to the concentration of the measurement ions (102) and a charging operation of charging the potential difference generation unit (71), before the other.

6. The ion concentration measurement device (1) according to claim 5,
wherein the second potential difference is different from the first potential difference.

7. The ion concentration measurement device (1) according to claim 1,

wherein when the first operation is performed, a voltage is applied between a source and a drain of the ion sensitive field effect transistor, ISFET, and
when the second operation is performed, the drain and the source of the ion sensitive field effect transistor, ISFET, are connected to a first reference potential portion.

8. The ion concentration measurement device (1) according to claim 7,
wherein when the second operation is performed, the measurement film electrode (17) is connected to a second reference potential portion.

9. The ion concentration measurement device (1) according to claim 8,
wherein a potential of the first reference potential portion is the same as a potential of the second reference potential portion.

**Patentansprüche**

1. Ionenkonzentrations-Messvorrichtung (1), welche in einem Messobjekt (101) installiert ist, das Messionen (102) und Nicht-Messionen (103) beinhaltet, um eine Konzentration der Messionen (102) zu ermitteln, wobei die Vorrichtung (1) umfasst:

eine im Messobjekt (101) angeordnete Messobjekt-Elektrode (14) zur Steuerung eines Potentials des Messobjekts (101);

eine Messobjekt-Stromquelle (16), die über einen ersten Schalter (72) mit der Messobjekt-Elektrode (14) verbunden werden kann und die eine Spannung an die Messobjekt-Elektrode (14) anlegt;

eine Messsensoreinheit (2) mit einer für Messionen empfindlichen Schicht (7), die eine Spannung erzeugt, welche der Konzentration der Messionen (102) entspricht;

eine Messfilm-Elektrode (17), die in der für Messionen empfindlichen Schicht (7) angeordnet ist, um ein Potential der für Messionen empfindlichen Schicht (7) zu steuern;

eine Messfilm-Stromquelle (18), die über einen zweiten Schalter (73) mit der Messfilm-Elektrode (17) verbunden werden kann, und die eine Spannung an die Messfilm-Elektrode (17) anlegt;

eine Potentialdifferenz-Erzeugungseinheit (71), welche mit der Messobjekt-Elektrode (14) und der Messfilm-Elektrode (17) verbunden ist, ohne den ersten Schalter (72) und den zweiten Schalter (73) zu durchqueren, um eine Potentialdifferenz zwischen der Messobjekt-Elektrode (14) und der Messfilm-Elektrode (17) zu erzeugen; und

eine Stromquellensteuereinheit (19), welche eine Größenordnung der von der Messobjekt-Stromquelle (16) ausgegebenen Spannung steuert und welche eine Größenordnung der von der Messfilm-Stromquelle (18) ausgegebenen Spannung steuert,

wobei die Potentialdifferenz-Erzeugungseinheit (71) ein Kondensator (71) ist, und

wobei die Messsensoreinheit (2) ein ionenempfindlicher Feldeffekttransistor, ISFET, ist, welcher ein Substrat (4), einen auf dem Substrat (4) angebrachten Isolierfilm (6) und die auf dem Isolierfilm (6) angebrachte, für Messionen empfindliche Schicht (7) beinhaltet, und

wobei die Stromquellensteuereinheit (19) wechselseitig schalten kann zwischen:

einem ersten Betriebszustand, in dem die Messobjekt-Stromquelle (16) und die Messfilm-Stromquelle (18) dazu veranlasst werden, eine erste Potentialdifferenz zwischen der Messobjekt-Elektrode (14) und der Messfilm-Elektrode (17) zu erzeugen, indem die Messobjekt-Stromquelle (16) mit der Messobjekt-Elektrode (14) durch Einschalten des ersten Schalters (72) verbunden wird, und indem die Messfilm-Stromquelle (18) mit der Messfilm-Elektrode (17) durch Einschalten des zweiten Schalters (73) verbunden wird,

und einem zweiten Betriebszustand, bei dem die Potentialdifferenz-Erzeugungseinheit (71) veranlasst wird, eine zweite Potentialdifferenz zwischen der Messobjekt-Elektrode (14) und der Messfilm-Elektrode (17) zu erzeugen, indem mindestens einer der folgenden Vorgänge durchgeführt wird:

Trennen der Messobjekt-Stromquelle (16) von der Messobjekt-Elektrode (14) durch Unterbrechen des ersten Schalters (72),

und Trennen der Messfilm-Stromquelle (18) von der Messfilm-Elektrode (17) durch Unterbrechen des zweiten Schalters (73).

2. Ionenkonzentrations-Messvorrichtung (1) nach Anspruch 1,
wobei die Stromquellensteuereinheit (19) der Messsensoreinheit (2) ermöglicht, die der Konzentration der Messionen (102) entsprechende Spannung auszugeben, wenn der erste Trennvorgang durchgeführt wird, und der Messsensoreinheit (2) untersagt, die der Konzentration der Messionen (102) entsprechende Spannung auszugeben, wenn der zweite Trennvorgang durchgeführt wird.

3. Ionenkonzentrations-Messvorrichtung (1) nach Anspruch 1 oder 2,
wobei während der Durchführung des ersten Trennvorgangs die Stromquellensteuereinheit (19) einen Messvorgang, bei welchem die Messsensoreinheit (2) die der Konzentration der Messionen (102) entsprechende Spannung ausgibt, und einen Ladevorgang zum Laden der Potentialdifferenz-Erzeugungseinheit (71) parallel durchführt.

4. Ionenkonzentrations-Messvorrichtung (1) nach Anspruch 3,
wobei die zweite Potentialdifferenz der ersten Potentialdifferenz entspricht.

5. Ionenkonzentrations-Messvorrichtung (1) nach Anspruch 1 oder 2,
wobei bei Durchführen des ersten Trennvorgangs, die Stromquellensteuereinheit (19) einen Messvorgang, bei welchem die Messsensoreinheit (2) die der Konzentration der Messionen (102) entsprechende Spannung ausgibt, und einen Ladevorgang zum Laden der Potentialdifferenz-Erzeugungseinheit (71) vor dem jeweils anderen

durchführt.

6. Ionenkonzentrations-Messvorrichtung (1) nach Anspruch 5,
wobei die zweite Potentialdifferenz von der ersten Potentialdifferenz verschieden ist.

7. Ionenkonzentrations-Messvorrichtung (1) nach Anspruch 1,

wobei bei Durchführen des ersten Trennvorgangs eine Spannung zwischen einer Quelle und einem Abfluss des ionenempfindlichen Feldeffekttransistors, ISFET, angelegt wird, und
bei Durchführen des zweiten Trennvorgangs der Abfluss und die Quelle des ionenempfindlichen Feldeffekttransistors, ISFET, mit einem ersten Referenzpotential-Bereich verbunden sind.

8. Ionenkonzentrations-Messvorrichtung (1) nach Anspruch 7,
wobei bei Durchführen des zweiten Trennvorgangs die Messfilm-Elektrode (17) mit einem zweiten Referenzpotential-Bereich verbunden ist.

9. Ionenkonzentrations-Messvorrichtung (1) nach Anspruch 8,
wobei ein Potential des ersten Referenzpotential-Bereichs identisch ist zu einem Potential des zweiten Referenzpotential-Bereichs.

**Revendications**

1. Dispositif de mesure de concentration d'ions (1) installé dans un objet à mesurer (101) comprenant des ions à mesurer (102) et des ions à ne pas mesurer (103) pour obtenir une concentration des ions à mesurer (102), le dispositif comprenant :

une électrode de l'objet à mesurer (14) disposée dans l'objet à mesurer (101) pour commander un potentiel de l'objet à mesurer (101) ;
une source d'alimentation de l'objet à mesurer (16) qui est apte à être connectée à ladite électrode de l'objet à mesurer (14) par l'intermédiaire d'un premier commutateur (72) et qui est destinée à appliquer une tension à ladite électrode de l'objet à mesurer (14) ;
une unité de capteur de mesure (2) comprenant un film sensible aux ions à mesurer (7) qui est destiné à générer une tension correspondant à la concentration des ions à mesurer (102) ;
une électrode de film de mesure (17) disposée dans le film sensible aux ions à mesurer (7) pour commander un potentiel du film sensible aux ions à mesurer (7) ;
une source d'alimentation de film de mesure (18) qui est apte à être connectée à ladite électrode de film de mesure (17) par l'intermédiaire d'un deuxième commutateur (73) et qui est destinée à appliquer une tension à ladite électrode de film de mesure (17) ;
une unité de génération de différence de potentiel (71) connectée à ladite électrode de l'objet à mesurer (14) et ladite électrode de film de mesure (17), sans passer par le premier commutateur (72) et le deuxième commutateur (73), pour générer une différence de potentiel entre ladite électrode de l'objet à mesurer (14) et ladite électrode de film de mesure (17) ; et
une unité de commande de source d'alimentation (19) qui est destinée à commander la grandeur de la tension fournie par la source d'alimentation de l'objet à mesurer (16) et qui est destinée à commander la grandeur de la tension fournie par la source d'alimentation de film de mesure (18),
ladite unité de génération de différence de potentiel (71) étant un condensateur (71), et
ladite unité de capteur de mesure (2) étant un transistor à effet de champ sensible aux ions, ISFET, comprenant un substrat (4), un film isolant (6) prévu sur le substrat (4), et le film sensible aux ions à mesurer (7) prévu sur le film isolant (6), et
ladite unité de commande de source d'alimentation (19) étant destinée à commuter mutuellement entre une première opération consistant à amener la source d'alimentation de l'objet à mesurer (16) et la source d'alimentation de film de mesure (18) à générer une première différence de potentiel entre ladite électrode de l'objet à mesurer (14) et ladite électrode de film de mesure (17) en connectant la source d'alimentation de l'objet à mesurer (16) à ladite électrode de l'objet à mesurer (14) en fermant le premier commutateur (72) et en connectant la source d'alimentation de film de mesure (18) à ladite électrode de film de mesure (17) en fermant le deuxième commutateur (73), et une deuxième opération consistant à amener ladite unité de génération de différence de potentiel (71) à générer une deuxième différence de potentiel entre ladite électrode de l'objet à mesurer (14) et ladite électrode de film de mesure (17) en effectuant au moins une d'une opération consistant à déconnecter la source d'alimentation de l'objet à mesurer (16) d'avec ladite électrode de l'objet à mesurer (14) en ouvrant le premier commutateur (72) et d'une opération consistant à déconnecter la source d'alimentation de film de mesure (18) d'avec ladite électrode de film de mesure (17) en ouvrant le deuxième commutateur (73).

2. Dispositif de mesure de concentration d'ions (1) selon la revendication 1, dans lequel
ladite unité de commande de source d'alimentation (19) permet à ladite unité de capteur de mesure (2) de délivrer la tension correspondant à la concentration des ions à mesurer (102) lorsque la première opération est effectuée, et empêche ladite unité de capteur de mesure (2) de délivrer la tension correspondant à la concentration des ions à mesurer (102) lorsque la deuxième opération est effectuée.

3. Dispositif de mesure de concentration d'ions (1) selon la revendication 1 ou 2, dans lequel
lorsque la première opération est effectuée, ladite unité de commande de source d'alimentation (19) effectue une opération de mesure consistant à permettre à l'unité de capteur de mesure de délivrer la tension correspondant à la concentration des ions à mesurer (102) et une opération de charge consistant à charger ladite unité de génération de différence de potentiel (71) en parallèle.

4. Dispositif de mesure de concentration d'ions (1) selon la revendication 3, dans lequel
la deuxième différence de potentiel est égale à la première différence de potentiel.

5. Dispositif de mesure de concentration d'ions (1) selon la revendication 1 ou 2, dans lequel
lorsque la première opération est effectuée, ladite unité de commande de source d'alimentation (19) effectue au moins une d'une opération de mesure consistant à permettre à l'unité de capteur de mesure de délivrer la tension correspondant à la concentration des ions à mesurer (102) et d'une opération de charge consistant à charger ladite unité de génération de différence de potentiel (71), avant l'autre.

6. Dispositif de mesure de concentration d'ions (1) selon la revendication 5, dans lequel
la deuxième différence de potentiel est différente de la première différence de potentiel.

7. Dispositif de mesure de concentration d'ions (1) selon la revendication 1, dans lequel

lorsque la première opération est effectuée, une tension est appliquée entre la source et le drain du transistor à effet de champ sensible aux ions, ISFET, et
lorsque la deuxième opération est effectuée, le drain et la source du transistor à effet de champ sensible aux ions, ISFET, sont connectés à une première partie de potentiel de référence.

8. Dispositif de mesure de concentration d'ions (1) selon la revendication 7, dans lequel
lorsque la deuxième opération est effectuée, ladite électrode de film de mesure (17) est connectée à une deuxième partie de potentiel de référence.

9. Dispositif de mesure de concentration d'ions (1) selon la revendication 8, dans lequel
un potentiel de la première partie de potentiel de référence est égal à la deuxième partie de potentiel de référence.

# Fig.1

EP 4 421 485 B1

**Fig.2**

EP 4 421 485 B1

## Fig.3

*Fig.4*

*Fig.5*

# Fig.6

# Fig.7

```
                    ( START )
                        |
        ┌───────────────┤
        │   ┌───────────────────────────┐
        │   │ SWITCH CIRCUIT TO DRIFT   │ ── S11  ┐
        │   │   SUPPRESSION AND         │          │
        │   │   CHARGING CIRCUIT        │          │
        │   └───────────────────────────┘          │
        │               |                          │
        │   ┌───────────────────────────┐          │
        │   │      SET DRIFT            │ ── S12   ├ S10
        │   │  SUPPRESSION VOLTAGE      │          │
        │   └───────────────────────────┘          │
        │               |                          │
        │   ┌───────────────────────────┐          │
        │   │ PERFORM MEASUREMENT       │ ── S13   │
        │   │  VOLTAGE ACQUISITION      │          │
        │   │      OPERATION            │          ┘
        │   └───────────────────────────┘
        │               |
        │   ┌───────────────────────────┐          ┐
        │   │   SWITCH CIRCUIT TO       │ ── S31    │
        │   │    STORAGE CIRCUIT        │           │
        │   └───────────────────────────┘           ├ S30
        │               |                           │
        │   ┌───────────────────────────┐           │
        │   │     STAND BY FOR          │ ── S32    │
        │   │  PREDETERMINED TIME       │           ┘
        │   └───────────────────────────┘
        │               |
        └───────────────┘
```

EP 4 421 485 B1

*Fig.8*

# Fig.9

3A(1A)

# Fig.10

Fig.11

# Fig.12

# Fig.13

```
                    ┌─────────┐
                    │  START  │
                    └────┬────┘
                         │
   ┌─────────────────────┼──────────────────────┐
   │      ┌──────────────┴──────────────┐        ┐
   │      │ SWITCH CIRCUIT TO DRIFT     │─ S11   │
   │      │    SUPPRESSION CIRCUIT      │        │
   │      └──────────────┬──────────────┘        │
   │                     │                       │
   │      ┌──────────────┴──────────────┐        │
   │      │  SET DRIFT SUPPRESSION       │─ S12   ├ S10A
   │      │        VOLTAGE               │        │
   │      └──────────────┬──────────────┘        │
   │                     │                       │
   │      ┌──────────────┴──────────────┐        │
   │      │  PERFORM MEASUREMENT         │─ S13A  │
   │      │  VOLTAGE ACQUISITION         │        │
   │      │      OPERATION               │        ┘
   │      └──────────────┬──────────────┘
   │                     │
   │      ┌──────────────┴──────────────┐        ┐
   │      │  SWITCH CIRCUIT TO           │─ S21   │
   │      │    CHARGING CIRCUIT          │        │
   │      └──────────────┬──────────────┘        │
   │                     │                       │
   │      ┌──────────────┴──────────────┐        │
   │      │  SET CHARGING VOLTAGE        │─ S22   ├ S20
   │      └──────────────┬──────────────┘        │
   │                     │                       │
   │      ┌──────────────┴──────────────┐        │
   │      │  PERFORM CHARGING            │─ S23   │
   │      │      OPERATION               │        ┘
   │      └──────────────┬──────────────┘
   │                     │
   │      ┌──────────────┴──────────────┐        ┐
   │      │  SWITCH CIRCUIT TO           │─ S31   │
   │      │    STORAGE CIRCUIT           │        │
   │      └──────────────┬──────────────┘        ├ S30
   │                     │                       │
   │      ┌──────────────┴──────────────┐        │
   │      │  STAND BY FOR                │─ S32   │
   │      │  PREDETERMINED TIME          │        ┘
   │      └──────────────┬──────────────┘
   └─────────────────────┘
```

*Fig.14*

EP 4 421 485 B1

**EP 4 421 485 B1**

**REFERENCES CITED IN THE DESCRIPTION**

**Patent documents cited in the description**

- JP 2011215105 A
- WO 2019230917 A
- US 2019360962 A1